# EUROPEAN PATENT SPECIFICATION

(11) **EP 3 860 188 B1**
(45) Date of publication and mention of the grant of the patent: **28.01.2026**
(21) Application number: 19867577.9
(22) Date of filing: 24.09.2019
(51) Int. Cl.: H04W 24/02, H04L 43/065, H04L 43/0852, H04L 43/0888, H04L 43/0894, H04W 24/10, H04W 84/00, H04W 92/18, H04L 41/0806

(54) **DRIVE TESTING METHOD AND DEVICE, DRIVE TESTING CONTROL METHOD AND DEVICE, APPARATUS, AND STORAGE MEDIUM**
FAHRTESTVERFAHREN UND -VORRICHTUNG, FAHRTESTSTEUERUNGSVERFAHREN UND -VORRICHTUNG, EINRICHTUNG UND SPEICHERMEDIUM
PROCÉDÉ ET DISPOSITIF D'ESSAI DE CONDUITE, PROCÉDÉ ET DISPOSITIF DE COMMANDE D'ESSAI DE CONDUITE, APPAREIL, ET SUPPORT DE STOCKAGE

(30) Priority: 28.09.2018 CN 201811143392
(43) Date of publication of application: 04.08.2021
(73) Proprietor: ZTE Corporation, Shenzhen, Guangdong 518057 (CN)
(72) Inventor: WANG, Mengzhen, Shenzhen, Guangdong 518057 (CN); CHEN, Lin, Shenzhen Guangdong 518057 (CN); LI, Dapeng, Shenzhen Guangdong 518057 (CN); GAO, Yin, Shenzhen Guangdong 518057 (CN); ZHANG, Boyuan, Shenzhen Guangdong 518057 (CN)
(74) Representative: Boario, Enrico
(86) International application number: PCT/CN2019/107528
(87) International publication number: WO 2020/063588

(56) References cited:
- WO-A1-2016/179835
- WO-A1-2018/113947
- WO-A1-2018/171580
- WO-A2-2012/138083
- CN-A- 106 454 927
- CN-A- 109 246 659
- "3rd Generation Partnership Project; Technical Specification Group Radio Access Network; Evolved Universal Terrestrial Radio Access Network (E-UTRAN); X2 application protocol (X2AP) (Release 15)", 3GPP STANDARD; TECHNICAL SPECIFICATION; 3GPP TS 36.423, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V15.3.0, 25 September 2018 (2018-09-25), pages 1 - 401, XP051487384
- ERICSSON: "Introduction of Band 66", vol. RAN WG4, no. Anaheim, CA, US; 20151116 - 20151120, 4 December 2015 (2015-12-04), XP051656458, Retrieved from the Internet <URL:http://www.3gpp.org/ftp/tsg%5Fran/TSG%5FRAN/TSGR%5F70/Docs/RP%2D152172%2Ezip> [retrieved on 20151204]
- ZTE: "Results on Sidelink RSRP Measurements for Relay UE Selection", 3GPP TSG-RAN WG4 MEETING #77 R4-157501, 20 November 2015 (2015-11-20), XP051028594

## Description

### TECHNICAL FIELD

Embodiments of the present disclosure relate to, but are not limited to, the field of communications and, in particular, relates to, but is not limited to, a driving test method and apparatus, a driving test control method and apparatus, a device, and a storage medium.

### BACKGROUND

Internet of Vehicles refers to a massive system network for wireless communication and information exchange between a vehicle and X (such as vehicles, pedestrians, roadside infrastructure, or the Internet) in accordance with an agreed communication protocol and a data interaction standard. The Internet of Vehicles communication can enable vehicles to acquire driving safety, improve transportation efficiency, and provide convenience or entertainment information. Based on the objects of wireless communication, there are three different types of Internet of Vehicles communication: Vehicle-to-Vehicle (V2V) communication, Vehicle-to-Infrastructure/Vehicle-to-Network (V2I/V2N) communication, and Vehicle-to-Pedestrian (V2P) communication, all of which are collectively referred to as V2X communication.

With the progress of technology and the development of the automation industry, V2X communication scenarios extend further and put forward high performance requirements. However, there is no comprehensive and complete method related to the obtaining of Internet of Vehicles traffic or a method related to the detection of the quality of service of communication over the sidelink. Therefore, it is necessary to provide a comprehensive and complete method related to the obtaining of Internet of Vehicles traffic or a method related to the detection of the quality of service of communication over the sidelink, so as to optimize network scheduling and better ensure the quality of service.

Further relevant technologies are also known from WO 2018/113947A1 (ERICSSON TELEFON AB L M [SE]) 28 June 2018 (2018-06-28).

### SUMMARY

The driving test method and apparatus, driving test control method and apparatus, device, and storage medium provided by embodiments of the present disclosure solve the problem that the driving test information on the sidelink cannot be obtained comprehensively and completely. The invention is set out in the appended set of claims.

### BRIEF DESCRIPTION OF DRAWINGS

FIG. 1 is a diagram showing V2X sidelink communication in Internet of Vehicles in the related art;
FIG. 2 is a diagram showing a sidelink-based driving test method according to an embodiment of the present disclosure;
FIG. 3 is a flowchart of a method of sidelink driving test performed between a base station and a UE according to an embodiment of the present disclosure;
FIG. 4 is a flowchart of a method of sidelink driving test autonomously performed by a UE according to an embodiment of the present disclosure;
FIG. 5 is a flowchart of obtaining and reporting driving test configuration information by an idle UE or inactive UE according to an embodiment of the present disclosure;
FIG. 6 is a flowchart of sidelink driving test activation according to an embodiment of the present disclosure;
FIG. 7 is a flowchart of sending sidelink driving test willingness information by a UE according to an embodiment of the present disclosure;
FIG. 8 is a flowchart of a process of controlling by using UE PC5 Quality of Service (QoS)-related parameter according to an embodiment of the present disclosure;
FIG. 9 is a diagram showing a driving test apparatus according to an embodiment of the present disclosure;
FIG. 10 is a diagram showing a driving test control apparatus according to an embodiment of the present disclosure; and
FIG. 11 is a diagram showing a device according to an embodiment of the present disclosure.

### DETAILED DESCRIPTION

Embodiments of the present disclosure are described in more detail hereinafter in conjunction with the drawings and implementations. It is to be understood that the implementations described herein are intended to explain and not to limit the embodiments of the present disclosure.

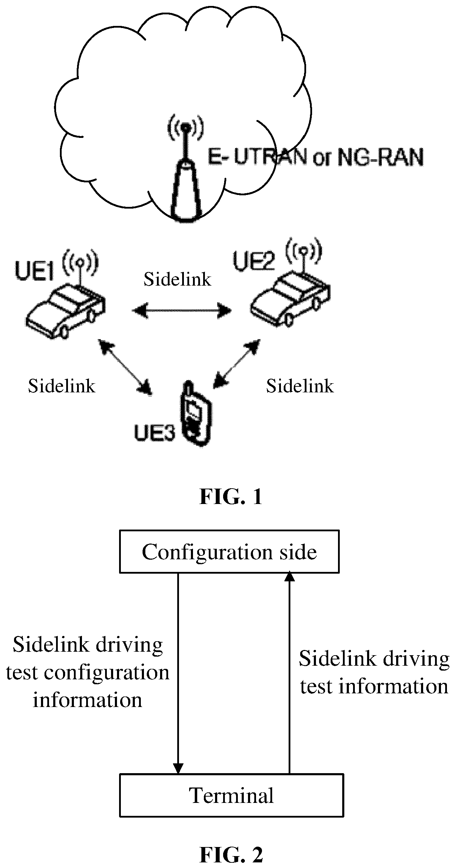

In the research on long term evolution (LTE)-based V2X communication carried out by the 3rd Generation Partnership Project (3GPP), the V2X communication method based on a sidelink between UEs is one way of implementing V2X standards. That is, traffic data is directly transmitted from a source UE to a target UE through an air interface without being forwarded by a base station and a core network. As shown in FIG. 1, such V2X communication method is referred to as PC5-based V2X communication or V2X sidelink communication.

With the progress of technology and the development of the automation industry, the V2X communication scenarios extend further and put forward high performance requirements. Advanced V2X traffic is mainly classified into four categories: vehicle platooning, extended sensors, advanced driving (semi-automated or full-automated driving), and remote driving. The performance requirements required for the advanced V2X traffic are as follows: the packet size supports 50 bytes to 12000 bytes, the transmission rate reaches 2 messages to 50 messages per second, the maximum end-to-end delay is 3 ms to 500 ms, the reliability is 90% to 99.999%, the data rate reaches 0.5 Mbps to 1000 Mbps, and the transmission range supports 50 meters to 1000 meters. In addition, the advanced V2X traffic also requires real-time QoS status reporting, real-time QoS update reporting, and support for QoS prediction and QoS negotiation based on time-location scenarios/environments so as to assist the adjustment of the autonomous driving level or driving behavior under different V2X environments and perform network scheduling optimization to better ensure the quality of service. However, there is no detection mechanism for Internet of Vehicles traffic or the quality of service of communication over the sidelink in the related art.

### Embodiment one

FIG. 2 is a basic diagram showing a sidelink-based driving test method according to an embodiment of the present disclosure. As shown in FIG. 2, the sidelink-based driving test method includes the following step: a terminal receives sidelink driving test configuration information sent by a configuration side; performs driving test on an environment where a terminal is located according to the sidelink driving test configuration information and obtains sidelink driving test information; and reports the obtained sidelink driving test information to the configuration side.

The step of receiving the sidelink driving test configuration information sent by the configuration side includes any one of: receiving the sidelink driving test configuration information from a base station; receiving the sidelink driving test configuration information from an centralized data processing center at an access network end; receiving the sidelink driving test configuration information from a pre-configuration information storage module; receiving the sidelink driving test configuration information from a road side unit (RUS) or a relay node; receiving the sidelink driving test configuration information from a local management terminal or a group management terminal; or receiving the sidelink driving test configuration information from a proximity service terminal.

In FIG. 2, the sidelink driving test configuration information is configured by the configuration side, and when the configuration side configures the sidelink driving test configuration information, the configuration side adjusts the configuration content of the sidelink driving test configuration information according to the Internet of Vehicles V2X traffic requirements in the local zone.

In this embodiment, the sidelink driving test configuration information includes at least one of: a measurement item, a measurement object, or a measurement-related parameter. After the sidelink driving test configuration information is sent to the terminal, the terminal performs driving test on the surrounding environment according to the sidelink driving test configuration information, and the terminal performs different measurement for the content of different sidelink driving test configuration information. When the sidelink driving test configuration information is a measurement item, the terminal performs measurement on a corresponding item of the environment where the terminal is located according to the measurement item and records a measurement result. When the sidelink driving test configuration information is a measurement object, the terminal determines a measurement target according to the measurement object. When the sidelink driving test configuration information is a measurement-related parameter, the terminal performs measurement on an environment parameter of the environment where the terminal is located according to the measurement-related parameter and records a measurement result.

In order to ensure the completeness of the obtained sidelink driving test information data, additionally, the configuration content of the sidelink driving test configuration information needs to be as complete as possible. The measurement item in the sidelink driving test configuration information includes at least one of: sidelink resource pool congestion measurement, sidelink resource pool resource conflict measurement, coverage measurement, mobility measurement, synchronization measurement, semi-persistent scheduling (SPS) usage measurement, sidelink QoS measurement, or sidelink channel quality measurement.

The measurement object in the sidelink driving test configuration information includes at least one of: a to-be-measured resource pool, a measurement execution zone, a measurement execution zone cell list, a to-be-measured SPS configuration index, a to-be-measured traffic type, or a measurable public land mobile network (PLMN) list.

The measurement-related parameter in the sidelink driving test configuration information includes at least one of: a channel busy-idle rate (CBR) threshold used for sidelink resource pool congestion measurement, a delay threshold for sidelink QoS measurement, a measurement period, or a measurement time interval.

In this embodiment, in order to avoid that in some cases, the terminal side is not provided with a reporting condition of the sidelink driving test information or that the configuration side needs to adjust the reporting condition of the sidelink driving test information according to the sidelink driving test configuration information, the sidelink driving test configuration information further includes a measurement reporting configuration condition. When the generated sidelink driving test information satisfies the measurement reporting configuration condition, the terminal reports the sidelink driving test information to the configuration side to complete the reporting process of the sidelink driving test information.

The measurement reporting configuration condition includes at least one of: a reporting period, an event triggered reporting threshold, a measurement item triggered reporting threshold, or a reporting content.

According to the sidelink-based driving test method provided in this embodiment, the configuration side sends the sidelink driving test configuration information to the terminal according to the situation of the local network, where the sidelink driving test configuration information includes several configuration items: the measurement item, the measurement object, and the measurement-related parameter, and each of the configuration items of the sidelink driving test configuration information further includes various measurement items, measurement objects, and measurement parameters. The terminal is controlled to obtain the corresponding sidelink driving test information through numerous configuration items so as to achieve the purpose of obtaining more complete sidelink driving test information, improve the efficiency of obtaining sidelink driving test resource configuration by the terminal, provide more effective reference indexes for V2X network optimization, and achieve better V2X network optimization effect.

### Embodiment two

With reference to FIG. 2, after the terminal receives the sidelink driving test configuration information sent by the configuration side, the terminal performs measurement according to the driving test configuration information, records data, and generates sidelink driving test information, where the sidelink driving test information includes at least one of: sidelink resource pool congestion measurement information, sidelink resource pool resource conflict information, coverage measurement information, mobility measurement information, synchronization measurement information, semi-persistent resource usage information, sidelink QoS measurement information, sidelink channel quality measurement information, measurement time-related information, geographic location information, sidelink communication traffic information, or terminal travel information.

When the sidelink driving test information is the sidelink QoS measurement information, the sidelink QoS measurement information include any one of: measurement result information of a block error rate (BLER) based on a physical sidelink share channel (PSSCH), or measurement result information of a BLER based on a physical sidelink control channel (PSCCH);or measurement result information of a data volume based on a sidelink logical channel, a sidelink bearer, a prose per-packet priority (PPPP), a prose per-packet reliability (PPPR), or a fifth-generation mobile communication system QoS identifier (5QI) between a source target pair, measurement result information of a throughput based on a sidelink logical channel, a sidelink bearer, a PPPP, a PPPR, or a 5QI between a source target pair, measurement result information of a packet delay based on a sidelink logical channel, a sidelink bearer, a PPPP, a PPPR, or a 5QI between a source target pair, measurement result information of a packet loss rate based on a sidelink logical channel, a sidelink bearer, a PPPP, a PPPR, or a 5QI between a source target pair, or measurement result information of a packet discard rate based on a sidelink logical channel, a sidelink bearer, a PPPP, a PPPR, or a 5QI between a source target pair.

When the sidelink driving test information is the sidelink communication traffic information, the sidelink communication traffic information includes at least one of: a traffic type, a traffic type version, a traffic generation period or a traffic sending period, a traffic-associated 5QI/PPPP/delay/reliability/transmission rate/transmission range or traffic transmission frequency point information, a communication type, base station scheduling or autonomously selecting resources, bandwidth adaptation information (that is, bandwidth part (BWP) information), a communication beam direction, or transmit power.

When the sidelink driving test information is the coverage measurement information, the coverage measurement information includes at least one of: a base station configuration resource, a pre-configured resource, an operator managed resource, a non-operator managed resource, a restricted service status, or information about time and geographic location at which a used resource type changes.

When the sidelink driving test information is the mobility measurement information, the mobility measurement information includes at least one of: a zone identification, geographic information of a zone, a time to enter the zone, a time of driving off from the zone, or a travel/residence time in the zone.

When the sidelink driving test information is the measurement time-related information, the measurement time-related information includes at least one of: a measurement start time, a measurement stop time, a measurement duration, a measurement period, or a measurement interval time.

In this embodiment, when the terminal obtains the sidelink driving test information, the method further includes: determining whether the obtained sidelink driving test information satisfies the reporting condition, and sending the sidelink driving test information to the configuration side when the sidelink driving test information satisfies the reporting condition.

When the sidelink driving test information obtained by the terminal satisfies the reporting condition, the terminal needs to report the sidelink driving test information. The reporting process further includes: sending a sidelink driving test information indication to the configuration side; obtaining a sidelink communication driving test reporting request sent by the configuration side based on the sidelink driving test information indication; and sending the sidelink driving test information to the configuration side according to the sidelink communication driving test reporting request.

As shown in FIG. 2, in this embodiment, the configuration side includes any one of: a base station, a relay node, or an RSU.

In this embodiment, the upper level of the configuration side may also include a first core configuration side. Before the configuration side sends the sidelink driving test configuration information to the terminal, the first core configuration side sends sidelink driving test activation information to the configuration side, and the configuration side activates the configuration side according to the sidelink driving test activation information and sends the sidelink driving test configuration information to the terminal.

The sidelink driving test activation information includes at least one of: a sidelink driving test instruction, a sidelink QoS prediction purpose instruction, a sidelink measurement item, a sidelink measurement traffic type, a trace identification, a PLMN list, a log duration, a log interval, a measurement period, a reporting period, a reporting trigger, or an event threshold. The sidelink driving test activation information further includes a UE PC5 QoS-related parameter. After the configuration side receives the UE PC5 QoS-related parameter, the configuration side performs admission control and resource scheduling on a UE PC5 transmission of the terminal according to the UE PC5 QoS-related parameter.

In this embodiment, the upper level of the configuration side may also include a second core configuration side. Before the configuration side sends the sidelink driving test configuration information to the terminal, the second core configuration side sends sidelink driving test willingness information to the configuration side, and the configuration side matches an appropriate driving test terminal according to the sidelink driving test willingness information and sends the sidelink driving test configuration information to the driving test terminal.

The sidelink driving test willingness information includes at least one of: a sidelink driving test execution willingness, a sidelink driving test information reporting willingness, a timely sidelink driving test willingness or an immediate sidelink driving test willingness, a sidelink driving test logging willingness, a sidelink driving test unicast/multicast/broadcast communication type willingness, or an application scope PLMN list.

This embodiment further provides a sidelink-based driving test control method. The method includes the following step: a configuration side sends sidelink driving test configuration information to a terminal, where the sidelink driving test configuration information is used for controlling the terminal to perform driving test on an environment where the terminal is located to obtain sidelink driving test information, and receives the sidelink driving test information reported by the terminal.

The method further includes the following step: the first core configuration side sends sidelink driving test activation information to the configuration side, where the sidelink driving test activation information is used for controlling the configuration side to send the sidelink driving test configuration information to the terminal; and performs admission control and resource scheduling on a UE PC5 transmission of the terminal according to a UE PC5 QoS-related parameter.

The method further includes the following step: the second core configuration side sends sidelink driving test willingness information to the configuration side, where the sidelink driving test willingness information is used for controlling the configuration side to match an appropriate driving test terminal.

In this embodiment, the terminal obtains the sidelink driving test information according to the received sidelink driving test configuration information, determines whether the obtained sidelink driving test information satisfies the reporting condition after the terminal obtains the sidelink driving test information, and when the obtained sidelink driving test information satisfies the reporting condition, reports the obtained sidelink driving test information to the configuration side. The collection of the sidelink driving test information is completed through the reporting of the sidelink driving test information, and then the V2X network optimizes the network according to the reported sidelink driving test information, thereby effectively improving the user experience on the UE side.

### Embodiment three

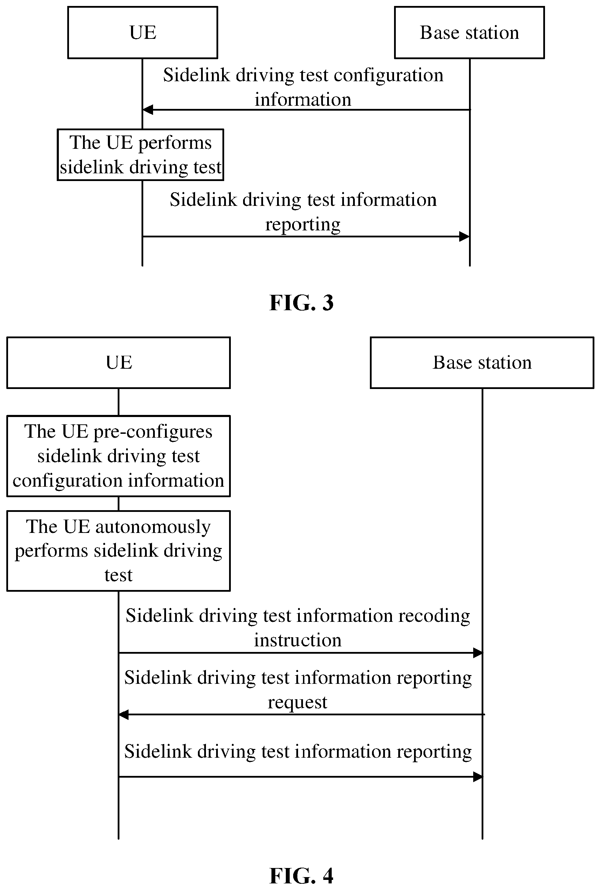

FIG. 3 is a flowchart of another sidelink driving test configuring and reporting according to an embodiment of the present disclosure. This method is mainly applied in a case where the configuration side is a base station (network side) and the terminal is an Internet of Vehicles UE. The base station sends sidelink driving test configuration information, and the UE performs sidelink communication driving test, obtains sidelink driving test information, and reports the sidelink driving test information to the base station.

Since within the coverage, the base station configures a sidelink communication resources/resource pools for the UE, the network needs to know the resource usage/congestion/load/QoS of the PC5 interface, which assists the network in better configuring and scheduling sidelink resources or being used for predicting sidelink QoS.

For the sidelink communication driving test, the following measurement items may be considered to be performed.

M1: sidelink resource pool configuration measurement. In R14 V2X, the sidelink congestion control mechanism is introduced to perform CBR measurement on the resource pool and adjust sending parameters timely according to the CBR measurement. The statistics of resource pool congestion on the basis of CBR can assist the network in adjusting the resource pool configuration or sending parameter configuration. Specifically, the base station sends measurement configuration information, where the measurement configuration information includes at least one of: a to-be-measured resource pool, configuring a CBR threshold, a measurement period, a reporting period, or a reporting triggering threshold (number of times or proportion). The UE performs the CRB measurement based on the measurement configuration information and counts the number of times when the CRB measurement value is greater than the CBR threshold within the measurement period or calculates a proportion of the number of times when the CRB measurement value is greater than the CBR threshold within the measurement period to the total number of times of CBR measurement. The UE records a measurement result and reports the measurement result when the reporting period arrivers, or triggers the reporting of the measurement result when the number of times when the CRB measurement value is greater than the CBR threshold or the proportion thereof reaches the reporting triggering threshold.

M2: sidelink resource pool resource conflict statistics. The UE performs sensing when selecting a resource, and if the UE finds that this resource has been selected/reserved/used, the UE would not select this resource. The statistics of sidelink resource pool resource conflicts is performed, which can assist the network in optimizing resource pool configuration or resource selection configuration parameters. Specifically, the base station sends measurement configuration information, where the measurement configuration information includes at least one of: a to-be-measured resource pool, a measurement period, a reporting period, or a reporting triggering threshold (number of times or proportion). The UE performs the measurement based on the measurement configuration, and counts the number of times when a resource conflict occurs in the resource pool within the measurement period, or calculates a proportion of the number of times when a resource conflict occurs in the resource pool within the measurement period to the total number of times of resource selection in the resource pool, or counts a probability of selecting enough available resources (satisfying the percentage of resource selection of 20%) at the time of sensing and resource selection. The UE records a measurement result, and reports the measurement result when the reporting period arrivers or triggers the reporting of the measurement result when the preceding number of times or proportion thereof reaches the reporting triggering threshold.

M3: coverage measurement. The coverage measurement refers to recording a detected restricted service status or information about time and geographic location at which used resource type changes when a base station configuration resource, a pre-configured resource, an operator managed resource or a non-operator managed resource is used. In R14 V2X, when the UE is within a network coverage (in a connected state or idle state), the UE uses a resource configured by the network, and when the UE is in no coverage, the UE uses a pre-configured resource. In addition, the UE may be configured with an operator-managed sidelink communication resource and/or a non-operator managed sidelink communication resource. The UE may use the non-operator managed resource when the UE is in a restricted service status under certain conditions (no suitable cell is found in the selected PLMN, or a disallowed response from the PLMN is received when a registration request is made, or a disallowed response from the GPRS is received when a registration request is made), while the UE cannot use the operator managed resource in a restricted service status under other conditions. Alternatively, when no operator managed resource is configured in certain zones, the UE can only use the pre-configured non-operator managed resource. Considering the coverage and resource configuration optimization, the UE may record a detected restricted service status or information about time and geographic location at which used resource type changes when a base station configuration resource, a pre-configured resource, an operator managed resource or a non-operator managed resource is used. For example, when the UE uses the non-operator managed resource, the UE may record related information, where the related information includes: information about time and geographic location at which the UE switches from the operator managed resource to the non-operator managed resource, a duration when the non-operator managed resource is continuously used, a driving distance/distance traveled/route in which the non-operator managed resource is continuously used, information about time and geographic location at which the UE switches from the non-operator managed resource to the operator managed resource, and a reason for which the non-operator managed resource is used (for example, no operator managed resource is configured, or there is a certain restricted service status). When the UE can report measurement record information (the UE enters the connected state, or there is a UE or an RSU which can forward the measurement record information for this UE to the base station and the reporting condition is satisfied), the UE reports the measurement record information to the network side. The network side may consider optimizing the geographic zone network coverage or the sidelink communication resource configuration.

M4: mobility measurement. The mobility measurement refers to recording information about travel/residence time in a divided geographic zone. In R14 V2X, the UE may use a sidelink resource pool associated with zone-based division, and the network may configure a zone division rule or configure a zone division rule through pre-configured information, where all zones divided based on this rule are equal in size. However, the number of UEs may be high in some zones while the number of UEs in some zones is low, and thus the zone division rule may not be reasonable. In this case, the UE may consider recording travel information in each zone, for example, an identification of the current zone, geographic information of a zone, a time to enter the zone, a time of driving off from the zone, or a travel/residence time in the zone (the vehicle density in a zone may be roughly determined through the travel time in this zone). When the UE satisfies the reporting condition or when the base station requests the UE to report zone measurement result information, the UE reports the zone measurement result. Based on the zone measurement result information, the base station/network may consider optimizing the division rule of some geographic zones, or configuring different division rules for different geographic zones, or configuring a plurality of sidelink resource pools for a vehicle-intensive zone, or taking other network optimization measures or scheduling optimization measures.

M5: synchronization measurement. The synchronization measurement refers to recording a synchronization source type used by the UE or synchronization source type change information. In R14 V2X, there are three synchronization sources, that is, evolved NodeB (eNB), Global Navigation Satellite System (GNSS), and UE. The priority of synchronization sources may be configured in the cell configuration and pre-configuration information, that is, which synchronization source type is given priority to is synchronized. The timing referred to by different synchronizations may be misaligned, and the misaligned timing may hinder the sidelink communication between neighboring UEs. When the UE synchronization source type changes, the UE may record synchronization source change information, for example, a time when the synchronization source changes, a geographic location where the synchronization source changes, an originally used synchronization source type, or a currently used synchronization source type. The network may optimize priority synchronization source types in different cells, different geographic zones, different time periods, or pre-configured information based on synchronization source measurement information.

M6: semi-persistent resource usage measurement. In R14 V2X, a plurality of sidelink SPS configurations may be configured and activated for the UE. The UE may detect and record the usage of each SPS configuration resource to assist the base station in optimizing the SPS configuration, and detect and record information such as an SPS index, whether the UE starts to use the resource from the first one of this group of SPS resources, a resource location where the UE uses this group of SPS resources for the first time, a time offset for the UE to wait for this group of SPS resources, which resources in this group of SPS resources are not used, the proportion of unused resources in this group of SPS resources within a period of time/measurement period (the proportion of the unused SPS resources to the total SPS resources in SPS index 1 within this period of time), or the time when the UE continuously uses this group of SPS resources/the number of resources continuous used by the UE.

M7: channel quality measurement. The channel quality measurement includes measurement of reference signal received quality (RSRQ)/reference signal received power (RSRP)/sidelink-received signal strengthen indicator (S-RSSI)/signal to interference and noise ratio (SINR) of a sidelink synchronization channel/discovery channel/data channel, and further includes measurement of RSRQ/RSRP/S-RSSI/SINR based on a beam (a synchronization signal block (SSB), or a channel state information reference signal (CSI-RS), or a sidelink measurement signal).

M8: sidelink QoS measurement. The sidelink QoS measurement includes at least one of: BLER measurement based on a PSSCH, or BLER measurement based on a PSCCH; or measurement on data volume/throughput/packet delay/packet loss rate/packet discard rate based on a logical channel/sidelink bearer/PPPP/PPPR/5QI between a source target pair. For example, the transmitter data volume is the number of bits of a packet data convergence protocol (PDCP) service data unit (SDU) sent from the PDCP layer to the radio link control (RLC) layer within the measurement period, and the measurement of the transmitter data volume is the measurement performed based on a sidelink logical channel or sidelink bearer or PPPP or PPPR or 5QI between a source target pair. The receiver data volume is the number of bits of a PDCP SDU successfully received within the measurement period, and the measurement of the receiver data volume is the measurement performed based on a sidelink logical channel or sidelink bearer or PPPP or PPPR or 5QI between a source target pair. The packet discard rate is the ratio of packets that are discarded on the PDCP layer, RLC layer and medium access control (MAC) layer and that are not transmitted at the PC5 interface (which is not caused due to switching) to the total number of packets entering the PDCP upper service accessing point (upper SAP) based on a sidelink logical channel or sidelink bearer or PPPP or PPPR or 5QI between a source target pair within the measurement time T. The packet loss rate is a ratio of the number of lost PDCP serial numbers (SNs) transmitted to the upper layer to the total number of PDCP SNs delivered to the upper layer (within the time T, the number of last PDCP SNs transmitted to the upper layer minus the PDCP SNs initially delivered to the upper layer) based on s sidelink logical channel or sidelink bearer or PPPP or PPPR or 5QI between a source target pair within the time T. The packet delay is the ratio of the number of packets (PDCP SDUs) whose packet PDCP queuing delay (the time from a moment when a packet arrives at the PDCP upper SAP to a moment when the packet starts to be delivered to the RLC layer) exceeds the configured delay threshold to the total number of packets based on s sidelink logical channel or sidelink bearer or PPPP or PPPR or 5QI between a source target pair within the time T.

FIG. 3 is a flowchart of sidelink driving test configuring and reporting.

In step 1, the UE receives sidelink driving test configuration information sent by the base station, where the sidelink driving test configuration information includes at least one of: a measurement item, a measurement object, a measurement-related parameter, or a measurement reporting configuration.

The measurement item includes at least one of: sidelink resource pool congestion measurement, sidelink resource pool resource conflict measurement, coverage measurement, mobility measurement, synchronization measurement, SPS usage measurement, sidelink QoS measurement, or sidelink channel quality measurement.

The measurement object includes at least one of: a to-be-measured resource pool, a measurement execution zone, a measurement execution zone cell list, a to-be-measured SPS configuration index, a to-be-measured service type, or a to-be-measured LMN list.

The measurement-related parameter includes at least one of: a CBR threshold used for sidelink resource pool congestion measurement, a measurement period, a measurement time interval, a measurable PLMN list, or a delay threshold for sidelink QoS measurement.

The measurement reporting configuration includes at least one of: a reporting period, an event triggered reporting threshold, a measurement item triggered reporting threshold, or a reporting content, where the reporting content indicates the measurement result information of which measurement items are reported.

The base station may send the sidelink driving test configuration information to the UE through RRC private signaling or a system broadcast message.

In addition, the UE may receive the sidelink driving test configuration information from a RUS or a relay node or a local management terminal or a group management terminal.

In step 2, the UE performs sidelink communication driving test, obtains sidelink driving test information, and stores the sidelink driving test information. The sidelink driving test information includes at least one of: sidelink resource pool congestion measurement information, sidelink resource pool resource conflict information, coverage measurement information, mobility measurement information, synchronization measurement information, semi-persistent resource usage information, sidelink QoS measurement information, sidelink channel quality measurement information, measurement time-related information, geographic location information of a measurement or recording moment, sidelink communication traffic information, or terminal travel information.

The sidelink QoS measurement information includes at least one of: measurement result information of a BLER measurement based on a sidelink data channel, PSSCH, or based on a sidelink control channel, PSCCH, or measurement result information of a data volume/throughput/packet delay/packet loss rate/packet discard rate based on a logical channel/sidelink bearer/PPPP/PPPR/5QI between a source target pair.

The sidelink channel quality measurement information includes at least one of: RSRQ and/or RSRP and/or S-RSSI and/or SINR of a sidelink synchronization channel and/or discovery channel and/or data channel, or RSRQ and/or RSRP and/or S-RSSI and/or SINR based on a sidelink communication beam (based on an SSB set, or a CSI-RS).

The coverage measurement information includes at least one of: a base station configuration resource, a preconfigured resource, an operator managed resource, a non-operator managed resource, a restricted service status, or information about time and geographic location at which a used resource type changes.

The mobility measurement information includes at least one of: a zone identification, geographic information of a zone, a time to enter the zone, a time of driving off from the zone, or a travel/residence time in the zone.

The sidelink communication traffic information includes at least one of: a traffic type, a traffic type version, a traffic generation/sending period, a traffic QoS demand (for example, a traffic-associated 5QI, PPPP, delay, reliability, transmission rate, or transmission range), traffic transmission frequency point information, a communication type (unicast, multicast or broadcast), base station scheduling or autonomously selecting resources, BWP information, a communication beam direction, transmit power, a sidelink discovery range, or the number of vehicles within the sidelink discovery range.

The terminal travel information includes at least one of: a speed, an acceleration, a direction, or a predicted travel route.

The measurement time-related information includes at least one of: a measurement start time, a measurement stop time, a measurement duration, a measurement period, or a measurement interval time.

In step 3, the UE reports the sidelink driving test information to the base station, and according to reporting configuration information in the sidelink driving test configuration information configured by the base station, reports measurement result information of the required measurement item when a sending period arrives or a reporting triggering condition is satisfied. In addition, the UE may send the sidelink driving test information to a centralized data processing center at a network side, a RUS, a relay node, a local/group management terminal, or a proximity service terminal.

The base station is an evolved-universal terrestrial radio access network (E-UTRAN), an eNB, or a fifth-generation mobile communication system (5G) next generation NodeB (gNB).

In this embodiment, through the above method, the base station sends the sidelink driving test configuration information to the UE, and the UE obtains the sidelink driving test information according to the received sidelink driving test configuration information and sends the sidelink driving test information to the base station. This solution is easy to implement, applicable to various scenarios, and makes it convenient to obtain the sidelink driving test configuration information.

### Embodiment four

FIG. 4 is a flowchart of a method of sidelink driving test autonomously performed by a UE according to an embodiment of the present disclosure. This method is mainly applied in a case where the Internet of Vehicles UE obtains the sidelink driving test information according to preset sidelink driving test configuration information. In this embodiment, the configuration side includes: a base station, a relay node, and an RSU.

For the Internet of Vehicles UE, the power saving and storage of the UE are not important factors, and the UE should be able to perform sidelink communication when the UE is in no network coverage. In this way, the UE driving test may not be controlled by the network, but the UE can perform sidelink communication driving test autonomously based on pre-configuration information. This method may be applied to UEs in any connection state (UE in a connected state, UE in an idle state, inactive UE, or UE in no coverage). The content of the pre-configured sidelink driving test configuration information is the same as the content of the sidelink driving test configuration information configured by the preceding base station. The UE records sidelink driving test information (that is, sidelink driving test measurement result information). When the UE has a reporting condition (the UE is willing to report or the UE satisfies the reporting condition or the UE enters the connected state), the UE sends a sidelink driving test information recording instruction to the base station. If the base station is interested in the driving test information of the UE, the base station sends a sidelink driving test information reporting request message to the UE to request the UE to send sidelink driving test information. After the UE receives the request, the UE sends the sidelink driving test information to the base station. The content of the sidelink driving test information is the same as the content of the sidelink driving test information described in the above embodiments, which will not be repeated herein. FIG. 4 is the flowchart of the above process. The sidelink driving test information recoding instruction may be carried in RRC Connection Reconfiguration Complete, RRC Connection Reestablishment Complete, RRC Connection Setup Complete, RRC Connection Resume Complete, or sidelink UE Information. The sidelink driving test information reporting request may be carried in UE Information Request. The sidelink driving test information reporting may be carried in UE Information Response or sidelink UE Information.

For the UE outside the coverage, although this UE is poor in real-time, the UE may be used for network optimization or used for QoS prediction or advance response when other UEs travel to the vicinity of the zone (for example, switching a certain V2X traffic from being transmitted through a Uu interface to being transmitted through a PC5 interface in advance to ensure traffic continuity and basic QoS guarantee; preparing a handover resource mode/handover resource pool in advance, and performing sensing in advance and resource conflict detection; and taking measures at the application layer in advance). Therefore, the UE outside the coverage may perform sidelink measurement recording.

In addition, for the UE in no coverage, the sidelink driving test information may also be forwarded to the network through a relay node (UE) or an RSU (UE-type RSU or base station-type RSU) which is in the coverage. The UE sends the sidelink driving test information recoding instruction to the relay node or the RUS; if the relay node or the RUS would like to forward the sidelink driving test information, the relay node or the RUS sends the sidelink driving test information reporting request to the UE; the UE sends the sidelink driving test information to the relay node or the RUS, and then the relay node or the RUS may send the sidelink driving test information to the network or the Internet of Vehicles information processing center. Optionally, the relay node or the RSU indicates to the base station the UE outside the coverage which has a sidelink driving test information record; if the base station agrees, the base station sends a sidelink driving test information reporting request to the relay node or the RSU; the relay node or the RSU forwards this request information to the UE; the UE sends the sidelink driving test information to the relay node or the RSU, and the relay node or the RSU forwards the sidelink driving test information to the base station. Alternatively, the UE may send the sidelink driving test information to a local/group management terminal or a proximity service terminal.

Through the above embodiment, the sidelink communication when there is no network coverage can be achieved, and meanwhile, the sidelink driving test information can be reported immediately.

### Embodiment five

This embodiment provides another manner for the UE in the idle state and the inactive UE to obtain the sidelink driving test configuration information.

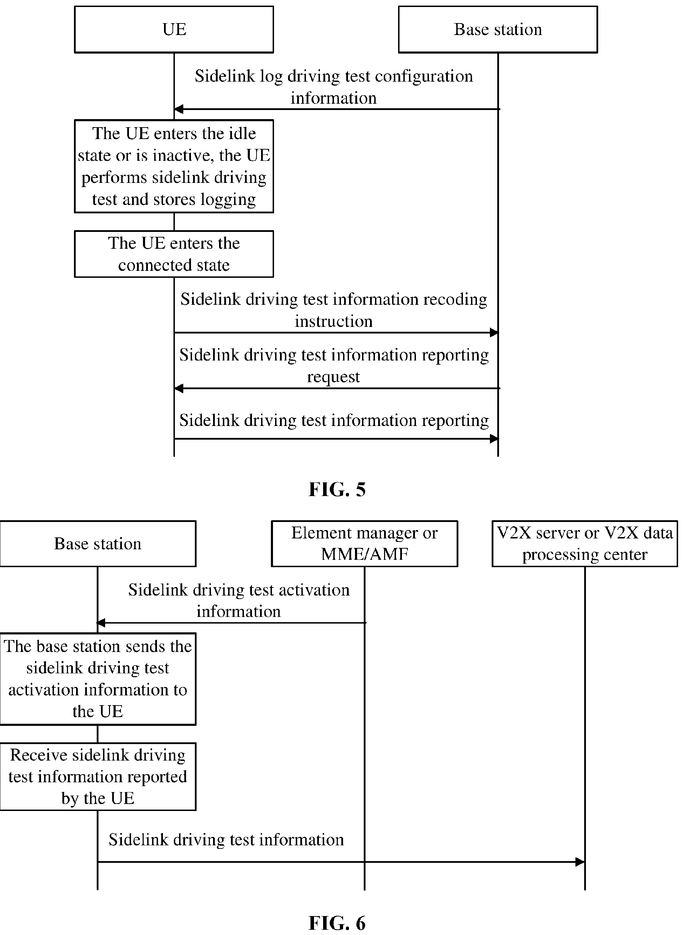

As shown in FIG. 5, when the UE is in the connected state, the network sends the sidelink driving test configuration information to the UE through a dedicated driving test configuration message (for example, Log Measurement Configuration). Besides the measurement zone range, configuration duration and/or recording interval included in the existing driving test logging configuration information, the sidelink driving test configuration information may also include, the configuration information specific to the sidelink driving test, which includes one or more of the following, but is not limited to: a sidelink measurement recording instruction (to instruct the terminal to perform sidelink traffic measurement recording), a sidelink measurement traffic type, a sidelink measurement item (to indicate which sidelink driving test items are recorded for measurement), a sidelink measurement frequency, etc.

After the UE receives sidelink logging driving test configuration information, the UE performs local storage and processing. The UE performs the sidelink measurement when the idle state configuration or the inactive state configuration starts to take effect, and records and stores the sidelink measurement. The UE checks whether the current zone satisfies the configuration range, and the UE may perform the sidelink measurement recording only within the configuration valid zone. When the UE enters the connected state, the UE indicates to the base station the sidelink driving test information record. The base station requests for the sidelink driving test information of the UE according to its own situation. The UE sends the recorded sidelink driving test information after receiving the request from the base station.

### Embodiment six

This embodiment is applicable to a case where the first core configuration side is an element manager or a mobility management entity (MME)/access management function (AMF).

This embodiment provides a process of achieving sidelink driving test configuration activation and reporting by using a Minimization of Drive-tests (MDT) mechanism. As shown in FIG. 6, there are two activation manners.
(1) The AMF sends sidelink driving test activation information to a gNB serving a certain terminal through a Next Generation (NG) interface. The AMF may send the sidelink driving test activation information to the base station through INITIAL CONTEXT SETUP REQUEST, TRACE START, NG HANDOVER REQUEST, or a newly added message. The sidelink driving test activation information includes at least one of: a sidelink driving test instruction (which is used for instructing the terminal to perform the sidelink driving test, and may instruct to perform the immediate driving test and/or the log driving test), a sidelink QoS prediction purpose instruction, a sidelink measurement item (for example, sidelink resource pool congestion measurement, sidelink resource pool resource conflict measurement, coverage measurement, mobility measurement, synchronization measurement, SPS usage measurement, sidelink QoS measurement, or sidelink channel quality measurement), a sidelink measurement traffic type, a trace identification, a PLMN list, a log duration, a log interval, a measurement period, a reporting period, a reporting trigger, or an event threshold. After the base station receives the sidelink driving test activation information, the base station sends the sidelink driving test configuration information to the UE according to the activation information (as described in Embodiment three). The base station receives the sidelink driving test information reported by the UE, performs local processing or sends the sidelink driving test information to a trace collection entity (TCE) or sends the sidelink driving test information to a V2X server or a V2X management network element or an access network-side centralized data processing center. The base station receiving the sidelink driving test information reported by the UE and the base station sending the sidelink driving test configuration information may be the same or different. If there is an E-UTRAN system, the MME sends the sidelink driving test activation information to an eNB through an S1 interface-related message (for example, INITIAL CONTEXT SETUP REQUEST, TRACE START, orS1 HANDOVER REQUEST).
(2) An element manager sends the sidelink driving test activation information to the base station, where the sidelink driving test activation information may be carried by a trace session activation message or other newly defined messages. The sidelink driving test activation information includes at least one of: a sidelink driving test instruction (which is used for instructing the terminal to perform the sidelink driving test, and may instruct to perform the immediate driving test and/or the log driving test), a sidelink measurement item (for example, sidelink resource pool congestion measurement, sidelink resource pool resource conflict measurement, coverage measurement, mobility measurement, synchronization measurement, SPS usage measurement, sidelink QoS measurement, or sidelink channel quality measurement), a sidelink measurement traffic type, a trace identification, a PLMN list, a log duration, a log interval, a measurement period, a reporting period, a reporting trigger, or an event threshold. After the base station receives the sidelink driving test activation information, the base station selects an appropriate UE to perform the sidelink driving test according to the activation information and sends the sidelink driving test configuration information to the selected UE (as described in Embodiment three). The base station receives the sidelink driving test information reported by the UE, performs local processing or sends the sidelink driving test information to a TCE or sends the sidelink driving test information to a V2X server or a V2X management network element or an access network-side centralized data processing center.

In addition, when the UE switches from a source gNB to a target gNB through an Xn interface, a source base station needs to send the sidelink driving test activation information or sidelink driving test configuration information of the UE to a target base station (a handover request). In a case of NG interface handover, the AMF sends the sidelink driving test activation information of the UE to a new base station (NG HANDOVER REQUEST). When the UE enters the inactive state in the original base station and establishes an RRC connection with the new base station, the new base station initiates Retrieve UE Context procedure on the Xn interface, and the original base station sends the sidelink driving test activation information or sidelink driving test configuration information of the UE to the new base station through RETRIEVE UE CONTEXT RESPONSE.

### Embodiment seven

This embodiment is applicable to the case where the second core configuration side is a core network element MME/AMF.

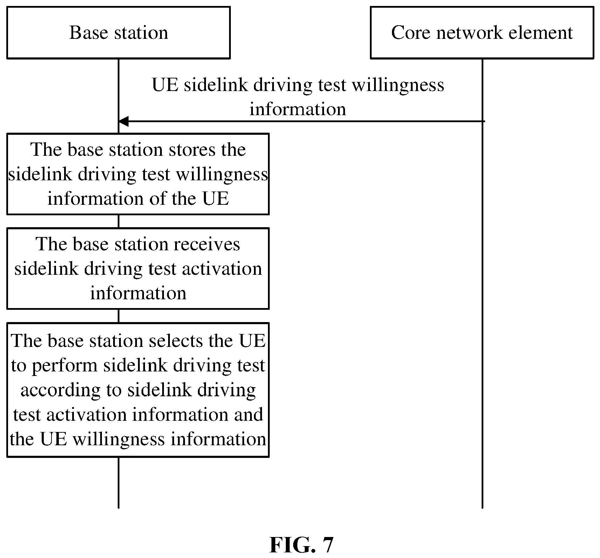

This embodiment provides a process of sending sidelink driving test willingness information. As shown in FIG. 7, the core network element sends sidelink driving test willingness information (as part of the UE context) of the UE to an access network element, where the sidelink driving test willingness information includes at least one of: a sidelink driving test execution willingness (whether willing to perform sidelink driving test), a sidelink driving test information reporting willingness (whether willing to report the sidelink derive testing result/recording information), a timely/immediate sidelink driving test willingness (immediate MDT), a sidelink driving test logging willingness (logging MDT), a sidelink driving test communication type willingness (unicast, multicast or broadcast), or an application scope PLMN list. The access network element receives the sidelink driving test willingness information of the UE and stores the sidelink driving test willingness information in the UE context information. When the access network element receives the sidelink driving test activation information, the access network element selects the appropriate UE to perform sidelink driving test according to the sidelink driving test activation information and sidelink driving test willingness information of the UE as well as other information.

In the E-UTRAN system, the access network element is an eNB, and the core network element is an MME. In the 5G system, the access network element is a gNB, and the core network element is an AMF. When the S1/NG handover occurs, the MME/AMF sends the sidelink driving test willingness information of the UE to the target base station (for example, through S1/NG Handover request). When the X2/Xn handover occurs, the source base station sends the sidelink driving test willingness information of the UE to the target base station (for example, through X2/Xn Handover request or PATH SWITCH REQUEST ACKNOWLEDGE). When the UE enters the inactive state in the original base station and establishes an RRC connection with the new base station, the new base station initiates Retrieve UE Context procedure on the Xn interface, and the original base station sends the sidelink driving test willingness information of the UE to the new base station through RETRIEVE UE CONTEXT RESPONSE.

### Embodiment eight

This method provides a sidelink QoS management method. The method includes the steps described below.

A base station obtains a UE PC5 QoS-related parameter from an access mobility management entity.

The base station performs sidelink communication configuration according to the UE PC5 QoS-related parameter.

The UE PC5 QoS-related parameter includes at least one of: a UE-PC5-aggregated maximum bit rate (AMBR), PC5 QoS rules, a PC5 QoS flow list, a 5QI corresponding to a PC5 QoS flow, a V2X traffic QoS identification, an allocation reservation priority (ARP), a guaranteed flow bit rate (GFBR), a maximum flow bit rate (MFBR), or a mirror QoS indication.

Before or after the base station obtains the UE PC5 QoS-related parameter from the access mobility management entity, the method further includes the following step: the base station receives a PC5 communication request/sidelink communication resource request from a terminal.

The PC5 communication request/sidelink communication resource request includes at least one of: 5QI, a PC5 interface QoS identification, a V2X traffic QoS identification, a QoS flow identifier (QFI), packet priority, delay, reliability, a data rate, a transmit frequency, a transmission range, or an available frequency point.

The step in which the base station performs sidelink communication configuration according to the UE PC5 QoS-related parameter includes the following: the base station performs admission control on the PC5 communication request and sends sidelink communication configuration information to a UE, where the sidelink communication configuration information includes at least one of: an admitted PC5 QoS flow list, a mapping relationship between the PC5 QoS flow and the sidelink bearer/logical channel, UE-PC5-AMBR, or a PC5 QoS flow preemption indication.

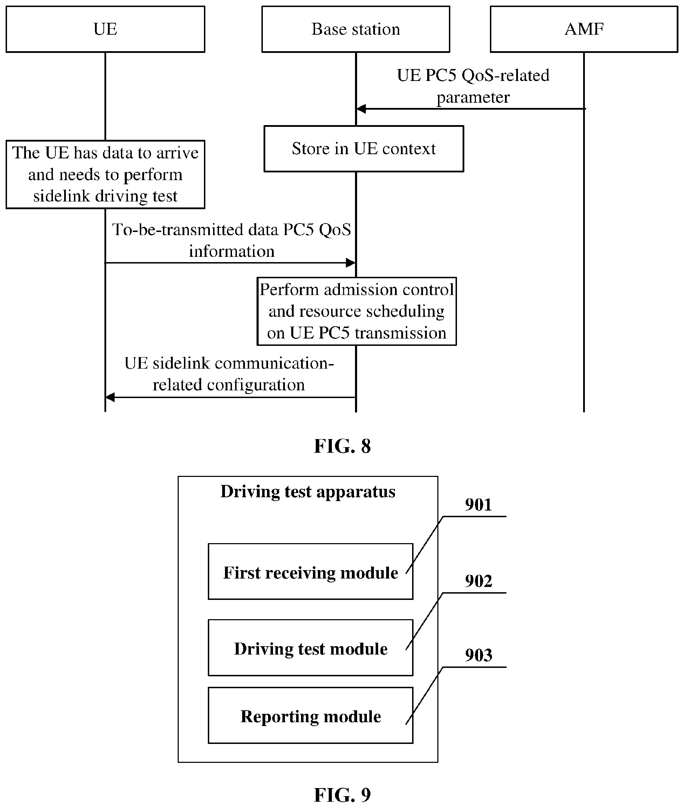

FIG. 8 illustrates the process of UE PC5 QoS management in this embodiment.

In the 5G system, the NR PC5 interface may adopt a QoS flow-based QoS mechanism which is similar to the 5G Uu QoS mechanism. The UE is pre-configured with PC5 QoS rules, and maps V2X packets to PC5 QoS flows according to QoS rules. The base station obtains the UE PC5 QoS-related parameter from the core network (AMF), such as PC5 QoS rules, UE-PC5-AMBR, a PC5 QoS flow list, a 5QI corresponding to a PC5 QoS flow, and ARP which indicates a relative priority of the QoS flow resource request, whether there is a resource preemption capability, and whether resources can be preempted. Furthermore, the PC5 QoS flow may support a GBR QoS flow and a non-guaranteed bit rate (non-GBR) QoS flow, where the GBR QoS flow may further include GFBR and MFBR, and the non-GBR QoS flow may further include a mirror QoS indication for indicating whether the QoS flow supports mirror mapping at the PC5 interface. The base station stores the obtained UE PC5 QoS-related parameter in UE context. It is to be noted that the base station may obtain the UE PCS-related parameter from the core network after the base station receives the PC5 communication request/resource request sent by the UE, for example, the base station sends to AMF the UE PC5 communication information (including at least one of the following: PC5 QFI, 5QI, a PC5 interface QoS identification, a V2X traffic QoS identification, packet priority, delay, reliability, etc.).

When the UE has data to send at the PC5 interface (for V2X sidelink communication) and the UE sends the PC5 communication request/resource request to the base station, the UE reports PC5 QoS information of the to-be-sent data to the base station. The PC5 QoS information includes at least one of: 5QI, a PC5 interface QoS identification, a V2X traffic QoS identification, QFI, packet priority, delay, reliability, a data rate, a transmission frequency, a transmission range, an available frequency point, and the PC5 QoS information may be sent through sidelink UE Information, UE assistance Information, or other messages used for indicating sidelink communication-related information. When the base station receives the sidelink communication resource request from the UE, the base station determines, according to QoS information of the to-be-sent data and the PC5 QoS-related parameter in the UE context, whether to admit the PC5 QoS flow transmission and allocate sidelink communication resources to the PC5 QoS flow transmission. For example, the base station determines whether to admit the transmission of a certain PC5 QoS flow based on ARP information of the PC5 QoS flow in the UE context and the current sidelink resource usage. If the base station determines to admit the transmission of the certain PC5 QoS flow, the base station may further configure the mapping relationship between the PC5 QoS flow and the sidelink bearer/logic channel, and if no appropriate sidelink bearer/logic channel is available, the base station configures sidelink bearer configuration information for the UE. The base station sends the admitted PC5 QoS flow list and the mapping relationship between the PC5 QoS flow and the sidelink bearer/logic channel to the UE. For the base station scheduling mode, the base station schedules resources for the UE based on the UE-PC5-AMBR. In addition, for the mode of UE autonomously selecting resources, the base station may further indicate whether each PC5 QoS flow can be preempted and/or whether each PC5 QoS flow is allowed to be preempted so that transmission of a PC5 QoS flow having high priority and transmission of a PC5 QoS flow of the preemptable resource can be satisfied accordingly when the UE resource pool is congested.

In addition, when the NG handover occurs, the AMF sends the PC5 QoS-related parameter of the UE to the target base station (for example. NG Handover request). When the Xn handover occurs, the source base station sends the PC5 QoS-related parameter of the UE to the target base station (for example, through Xn Handover request or PATH SWITCH REQUEST ACKNOWLEDGE). When the UE enters the inactive state in the original base station and establishes an RRC connection with the new base station, the new base station initiates Retrieve UE Context procedure on the Xn interface, and the original base station sends the PC5 QoS-related parameter of the UE to the new base station through RETRIEVE UE CONTEXT RESPONSE.

### Embodiment nine

This embodiment provides a driving test apparatus. The apparatus may be applied to the terminal in this embodiment. With reference to FIG. 9, the apparatus includes a first receiving module 901, a driving test module 902, and a reporting module 903. The first receiving module 901 is configured to receive sidelink driving test configuration information sent by a configuration side. The driving test module 902 is configured to perform driving test on an environment where a terminal is located according to the sidelink driving test configuration information and obtain sidelink driving test information. The reporting module 903 is configured to report the obtained sidelink driving test information to the configuration side. For the steps implemented by each module in the apparatus and implementation processes thereof, the reference may be made to the timing alignment multiplexing procedure of the time slot of the node data transmission shown in the above embodiments, and details will not be described herein.

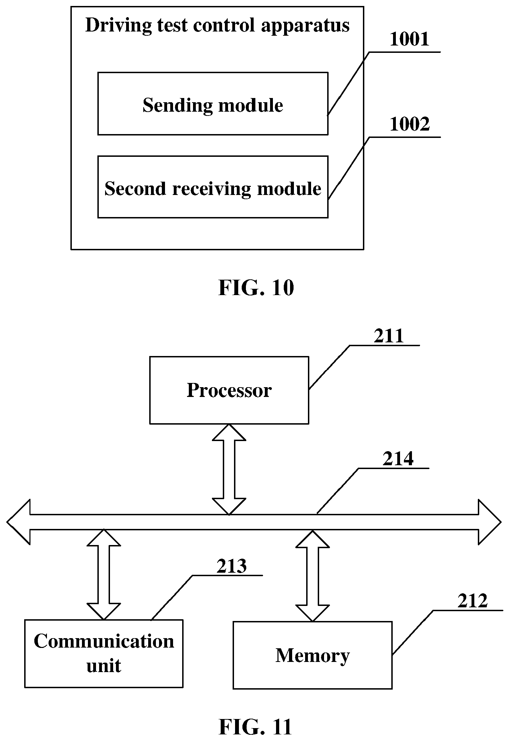

This embodiment further provides a driving test control apparatus. The apparatus may be applied to the configuration side in this embodiment. With reference to FIG. 10, the driving test control apparatus includes a sending module 1001 and a second receiving module 1002. The sending module 1001 is configured to send, by a configuration side, sidelink driving test configuration information to a terminal, where the sidelink driving test configuration information is used for controlling the terminal to perform driving test on an environment where the terminal is located to obtain sidelink driving test information. The second receiving module 1002 is configured to receive the sidelink driving test information reported by the terminal. For the steps implemented by each module in the terminal and implementation processes thereof, the reference may be made to the timing alignment multiplexing procedure of the time slot of the node data transmission shown in the above embodiments, and details will not be described herein.

This embodiment provides a driving test apparatus and a driving test control apparatus. The driving test control apparatus is configured to send sidelink driving test configuration information to the driving test apparatus, the driving test apparatus reports sidelink driving test information to the driving test control apparatus according to the sidelink driving test configuration information, and the driving test control apparatus obtains the sidelink driving test information and then performs optimization on the V2X network, thereby improving the use experience of the driving test apparatus in the V2X network.

### Embodiment ten

This embodiment provides a device. With reference to FIG. 11, the device includes a processor 211, a memory 212, a communication unit 213. and a communication bus 214.

The communication bus 214 is configured to enable connection and communication between the processor 211, the communication unit 213. and the memory 212.

In one embodiment, the processor 211 is configured to execute one or more first programs to perform the driving test method described in the above embodiments.

In another embodiment, the processor 211 is configured to execute one or more second programs to perform the driving test control method described in the above embodiments.

For the steps implemented by each module in the apparatus and implementation processes thereof, the reference may be made to the timing alignment multiplexing procedure of the time slot of the node data transmission shown in the above embodiments, and details will not be described herein.

This embodiment further provides a computer-readable storage medium. The computer-readable storage medium includes a volatile or nonvolatile medium or a removable or non-removable medium implemented in any method or technology for storing information (such as computer-readable instructions, data structures, computer program modules or other data). The computer-readable storage medium includes, but is not limited to, a random-access memory (RAM), a read-only memory (ROM), an electrically erasable programmable read-only memory (EEPROM), a flash memory or other memory technologies, a compact disc read-only memory (CD-ROM), a digital versatile disc (DVD) or other optical storages, a magnetic cassette, a magnetic tape, a magnetic disk or other magnetic storage devices, or any other medium for storing desired information that can be accessed by a computer.

In one example, the computer-readable storage medium in this embodiment may be configured to store one or more first computer programs, where the one or more first computer programs are executable by one or more processors to perform the driving test method described in the above embodiments.

In another example, the computer-readable storage medium in this embodiment may be configured to store one or more second computer programs, where the one or more second computer programs are executable by one or more processors to perform the driving test control method described in the above embodiments.

This embodiment provides a first computer program (or called computer software) which can be distributed on a computer-readable medium and executed by a computing apparatus to implement the sidelink driving test method described in the above embodiments. In some circumstances, the at least one step illustrated or described may be performed in sequences different from those described in the above embodiments.

This embodiment further provides a second computer program (or called computer software) which can be distributed on a computer-readable medium and executed by a computing apparatus to implement the sidelink driving test control method described in the above embodiments. In some circumstances, the at least one step illustrated or described may be performed in sequences different from those described in the above embodiments.

This embodiment further provides a computer program product. The computer program product includes a computer-readable apparatus on which the first computer program and/or the second computer program described above are stored. The computer-readable apparatus in this embodiment may include the computer-readable storage medium described above.

It is to be understood by those skilled in the art that some or all steps of the preceding method and function modules/units in the preceding system or apparatus may be implemented as software (which may be implemented by computer program codes executable by a computing device), firmware, hardware and suitable combinations thereof. In the hardware implementation, the division of the preceding function modules/units may not correspond to the division of physical components. For example, one physical component may have multiple functions, or one function or step may be performed jointly by several physical components. Some or all physical components may be implemented as software executed by a processor such as a central processing unit, a digital signal processor or a microprocessor, may be implemented as hardware, or may be implemented as integrated circuits such as application-specific integrated circuits.

Additionally, as is known to those having ordinary skill in the art, communication media generally include computer-readable instructions, data structures, computer program modules, or other data in carriers or in modulated data signals transported in other transport mechanisms and may include any information delivery medium. Therefore, the present application is not limited to any particular combination of hardware and software.

## Claims

1. A driving test method, comprising:
receiving, by a terminal, sidelink driving test configuration information from a configuration side; performing, by the terminal, driving test on an environment where a terminal is located according to the sidelink driving test configuration information, and obtaining sidelink driving test information; and
reporting, by the terminal, the obtained sidelink driving test information to the configuration side; wherein the sidelink driving test configuration information comprises a measurement item which comprises at least one of: sidelink resource pool congestion measurement, sidelink resource pool resource conflict measurement, coverage measurement, mobility measurement, synchronization measurement, semi-persistent scheduling, SPS, usage measurement, or sidelink Quality of Service, QoS, measurement;
wherein the sidelink driving test information comprises at least one of:
sidelink resource pool congestion measurement information;
sidelink QoS measurement information comprising at least one of:
measurement result information of a block error rate, BLER, based on a physical sidelink share channel, PSSCH;
measurement result information of a BLER based on a physical sidelink control channel, PSCCH;
measurement result information of a data volume based on a sidelink logical channel, or a sidelink bearer, or a prose per-packet priority, PPPP, or a prose per-packet reliability, PPPR, or a fifth-generation mobile communication system QoS identifier, 5QI, between a source target pair;
measurement result information of a throughput based on a sidelink logical channel, or a sidelink bearer, or a PPPP, or a PPPR, or a 5QI between a source target pair;
measurement result information of a packet delay based on a sidelink logical channel, or a sidelink bearer, or a PPPP, or a PPPR, or a 5QI between a source target pair;
measurement result information of a packet loss rate based on a sidelink logical channel, or a sidelink bearer, or a PPPP, or a PPPR, or a 5QI between a source target pair; or
measurement result information of a packet discard rate based on a sidelink logical channel, or a sidelink bearer, or a PPPP, or a PPPR, or a 5QI between a source target pair;
sidelink communication traffic information comprising at least one of:
a traffic type; a traffic type version; a traffic generation or sending period; one of a traffic-associated 5QI, PPPP, delay, reliability, transmission rate, or transmission range; traffic transmission frequency point information; one of a unicast communication type, a multicast communication
type or broadcast communication type; base station scheduling or autonomously selecting resources; bandwidth part, BWP, information; a communication beam direction; or transmit power;
coverage measurement information comprising at least one of:
a base station configuration resource, a pre-configured resource, an operator managed resource, a non-operator managed resource, a limited service status, or information about time and geographic location at which a used resource type changes; and
mobility measurement information comprising at least one of:
a zone identification, geographic information of a zone, a time to enter the zone, a time of driving off from the zone, or a travel time or a residence time in the zone.

2. The method of claim 1, wherein the receiving the sidelink driving test configuration information from the configuration side comprises one of:
receiving the sidelink driving test configuration information from a base station;
receiving the sidelink driving test configuration information from an centralized data processing center at an access network end ;
receiving the sidelink driving test configuration information from a pre-configuration information storage module;
receiving the sidelink driving test configuration information from a road side unit, RUS, or a relay node;
receiving the sidelink driving test configuration information from a local management terminal or a group management terminal; or
receiving the sidelink driving test configuration information from a proximity service terminal.

3. The method of claim 1, wherein the sidelink driving test configuration information further comprises at least one of: a measurement object, or a measurement-related parameter.

4. The method of claim 3, wherein the performing the driving test on the environment where the terminal is located according to the sidelink driving test configuration information comprises at least one of:
performing measurement on a corresponding item of the environment where the terminal is located according to the measurement item, and recording a measurement result;
determining a measurement target according to the measurement object; or
performing measurement on an environment parameter of the environment where the terminal is located according to the measurement-related parameter, and recording a measurement result.

5. The method of claim 3, wherein the measurement object comprises at least one of: a to-be-measured resource pool, a measurement execution zone, a measurement execution zone cell list, a to-be-measured SPS configuration index, a to-be-measured traffic type, or a measurable public land mobile network, PLMN, list.

6. The method of claim 3, wherein the measurement-related parameter comprises at least one of: a channel busy-idle rate, CBR, threshold used for sidelink resource pool congestion measurement, a delay threshold for sidelink QoS measurement, a measurement period, or a measurement time interval.

7. The method of claim 3, wherein the sidelink driving test configuration information further comprises a measurement reporting configuration condition; and
the reporting the obtained sidelink driving test information to the configuration side comprises: in response to the sidelink driving test information satisfying the measurement reporting configuration condition, reporting the sidelink driving test information to the configuration side.

8. The method of claim 7, wherein the measurement reporting configuration condition comprises at least one of: a reporting period, an event triggered reporting threshold, a measurement item triggered reporting threshold, or a reporting content.

9. The method of claim 1, wherein the sidelink driving test information further comprises at least one of: sidelink resource pool resource conflict information, synchronization measurement information, semi-persistent resource usage information, sidelink channel quality measurement information, measurement time-related information, geographic location information, or terminal travel information.

10. The method of claim 9, wherein the measurement time-related information comprises at least one of: a measurement start time, a measurement stop time, a measurement duration, a measurement period, or a measurement interval time.

11. The method of claim 1, wherein the reporting the obtained sidelink driving test information to the configuration side comprises:
sending a sidelink driving test information indication to the configuration side;
obtaining a sidelink communication driving test reporting request from the configuration side; and
sending the sidelink driving test information to the configuration side according to the sidelink communication driving test reporting request.

12. The method of claim 11, wherein the configuration side comprises at least one of: a base station, an centralized data processing center at an access network end , a pre-configuration information storage module, a relay node, an RSU, a local management terminal or a group management terminal, or a proximity service terminal.

13. The method of any one of claims 1 to 12, before receiving, by the terminal, the sidelink driving test configuration information from the configuration side, further comprising:
sending, by a first core configuration side, sidelink driving test activation information to the configuration side; and
activating, by the configuration side, the configuration side according to the sidelink driving test activation information, and sending the sidelink driving test configuration information to the terminal.

14. The method of claim 13, wherein the sidelink driving test activation information comprises at least one of: a sidelink driving test instruction, a sidelink QoS prediction purpose instruction, a sidelink measurement item, a sidelink measurement traffic type, a trace identification, a PLMN list, a log duration, a log interval, a measurement period, a reporting period, a reporting trigger, or an event threshold.

15. The method of any one of claims 1 to 12, before receiving, by the terminal, the sidelink driving test configuration information from the configuration side, further comprising:
sending, by a second core configuration side, sidelink driving test willingness information to the configuration side; and
matching, by the configuration side, an appropriate driving test terminal according to the sidelink driving test willingness information.

16. The method of claim 15, wherein the sidelink driving test willingness information comprises at least one of: a sidelink driving test execution willingness, a sidelink driving test information reporting willingness, a timely or immediate sidelink driving test willingness, a sidelink driving test logging willingness, a sidelink driving test unicast, multicast or broadcast communication type willingness, or an application scope PLMN list.

17. A driving test control method, comprising:
sending, by a configuration side, sidelink driving test configuration information to a terminal, wherein the sidelink driving test configuration information is used for controlling the terminal to perform driving test on an environment where the terminal is located to obtain sidelink driving test information; and
receiving, by the configuration side, the sidelink driving test information from the terminal; wherein the sidelink driving test configuration information comprises a measurement item which comprises at least one of: sidelink resource pool congestion measurement, sidelink resource pool resource conflict measurement, coverage measurement, mobility measurement, synchronization measurement, semi-persistent scheduling, SPS, usage measurement, or sidelink Quality of Service, QoS, measurement;
wherein the sidelink driving test information comprises at least one of:
sidelink resource pool congestion measurement information;
sidelink QoS measurement information comprising at least one of:
measurement result information of a block error rate, BLER, based on a physical sidelink share channel, PSSCH;
measurement result information of a BLER based on a physical sidelink control channel, PSCCH;
measurement result information of a data volume based on a sidelink logical channel, or a sidelink bearer, or a prose per-packet priority, PPPP, or a prose per-packet reliability, PPPR, or a fifth-generation mobile communication system QoS identifier, 5QI, between a source target pair;
measurement result information of a throughput based on a sidelink logical channel, or a sidelink bearer, or a PPPP, or a PPPR, or a 5QI between a source target pair;
measurement result information of a packet delay based on a sidelink logical channel, or a sidelink bearer, or a PPPP, or a PPPR, or a 5QI between a source target pair;
measurement result information of a packet loss rate based on a sidelink logical channel, or a sidelink bearer, or a PPPP, or a PPPR, or a 5QI between a source target pair; or
measurement result information of a packet discard rate based on a sidelink logical channel, or a sidelink bearer, or a PPPP, or a PPPR, or a 5QI between a source target pair; and
sidelink communication traffic information comprising at least one of:
a traffic type; a traffic type version; a traffic generation or sending period; one of a traffic-associated 5QI, PPPP, delay, reliability, transmission rate, or transmission range; traffic transmission frequency point information; one of a unicast communication type, a multicast communication
type or broadcast communication type; base station scheduling or autonomously selecting resources; bandwidth part ,BWP, information; a communication beam direction; or transmit power;
coverage measurement information comprising at least one of:
a base station configuration resource, a pre-configured resource, an operator managed resource, a non-operator managed resource, a limited service status, or information about time and geographic location at which a used resource type changes; and
mobility measurement information comprising at least one of:
a zone identification, geographic information of a zone, a time to enter the zone, a time of driving off from the zone, or a travel time or a residence time in the zone.

18. The method of claim 17, further comprising:
receiving sidelink driving test activation information from a first core configuration side, wherein the sidelink driving test activation information is used for controlling the configuration side to send the sidelink driving test configuration information to the terminal; and performing admission control and resource scheduling on a user equipment, UE, PC5 transmission of the terminal according to a UE PC5 Quality of Service, QoS,-related parameter.

19. The method of claim 17, further comprising:
receiving sidelink driving test willingness information from a second core configuration side, wherein the sidelink driving test willingness information is used for controlling the configuration side to match an appropriate driving test terminal.

20. A driving test apparatus, comprising:
a first receiving module, which is configured to receive sidelink driving test configuration information from a configuration side;
a driving test module, which is configured to perform driving test on an environment where a terminal is located according to the sidelink driving test configuration information, and obtain sidelink driving test information; and
a reporting module, which is configured to report the obtained sidelink driving test information to the configuration side;
wherein the sidelink driving test configuration information comprises a measurement item which comprises at least one of: sidelink resource pool congestion measurement, sidelink resource pool resource conflict measurement, coverage measurement, mobility measurement, synchronization measurement, semi-persistent scheduling, SPS, usage measurement, or sidelink Quality of Service, QoS, measurement;
wherein the sidelink driving test information comprises at least one of:
sidelink resource pool congestion measurement information;
sidelink QoS measurement information comprising at least one of:
measurement result information of a block error rate, BLER, based on a physical sidelink share channel, PSSCH;
measurement result information of a BLER based on a physical sidelink control channel, PSCCH;
measurement result information of a data volume based on a sidelink logical channel, or a sidelink bearer, or a prose per-packet priority, PPPP, or a prose per-packet reliability, PPPR, or a fifth-generation mobile communication system QoS identifier, 5QI, between a source target pair;
measurement result information of a throughput based on a sidelink logical channel, or a sidelink bearer, or a PPPP, or a PPPR, or a 5QI between a source target pair;
measurement result information of a packet delay based on a sidelink logical channel, or a sidelink bearer, or a PPPP, or a PPPR, or a 5QI between a source target pair;
measurement result information of a packet loss rate based on a sidelink logical channel, or a sidelink bearer, or a PPPP, or a PPPR, or a 5QI between a source target pair; or
measurement result information of a packet discard rate based on a sidelink logical channel, or a sidelink bearer, or a PPPP, or a PPPR, or a 5QI between a source target pair;
sidelink communication traffic information comprising at least one of:
a traffic type; a traffic type version; a traffic generation or sending period; one of a traffic-associated 5QI, PPPP, delay, reliability, transmission rate, or transmission range; traffic transmission frequency point information; one of a unicast communication type, a multicast communication
type or broadcast communication type; base station scheduling or autonomously selecting resources; bandwidth part ,BWP, information; a communication beam direction; or transmit power;
coverage measurement information comprising at least one of:
a base station configuration resource, a pre-configured resource, an operator managed resource, a non-operator managed resource, a limited service status, or information about time and geographic location at which a used resource type changes; and
mobility measurement information comprising at least one of:
a zone identification, geographic information of a zone, a time to enter the zone, a time of driving off from the zone, or a travel time or a residence time in the zone.

21. A driving test control apparatus, comprising:
a sending module, which is configured to send, by a configuration side, sidelink driving test configuration information to a terminal, wherein the sidelink driving test configuration information is used for controlling the terminal to perform driving test on an environment where the terminal is located and obtain sidelink driving test information; and
a second receiving module, which is configured to receive the sidelink driving test information from the terminal;
wherein the sidelink driving test configuration information comprises a measurement item which comprises at least one of: sidelink resource pool congestion measurement, sidelink resource pool resource conflict measurement, coverage measurement, mobility measurement, synchronization measurement, semi-persistent scheduling, SPS, usage measurement, or sidelink Quality of Service, QoS, measurement;
wherein the sidelink driving test information comprises at least one of:
sidelink resource pool congestion measurement information;
sidelink QoS measurement information comprising at least one of:
measurement result information of a block error rate, BLER, based on a physical sidelink share channel, PSSCH;
measurement result information of a BLER based on a physical sidelink control channel, PSCCH;
measurement result information of a data volume based on a sidelink logical channel, or a sidelink bearer, or a prose per-packet priority, PPPP, or a prose per-packet reliability, PPPR, or a fifth-generation mobile communication system QoS identifier, 5QI, between a source target pair;
measurement result information of a throughput based on a sidelink logical channel, or a sidelink bearer, or a PPPP, or a PPPR, or a 5QI between a source target pair;
measurement result information of a packet delay based on a sidelink logical channel, or a sidelink bearer, or a PPPP, or a PPPR, or a 5QI between a source target pair;
measurement result information of a packet loss rate based on a sidelink logical channel, or a sidelink bearer, or a PPPP, or a PPPR, or a 5QI between a source target pair; or
measurement result information of a packet discard rate based on a sidelink logical channel, or a sidelink bearer, or a PPPP, or a PPPR, or a 5QI between a source target pair; and
sidelink communication traffic information comprising at least one of:
a traffic type; a traffic type version; a traffic generation or sending period; one of a traffic-associated 5QI, PPPP, delay, reliability, transmission rate, or transmission range; traffic transmission frequency point information; one of a unicast communication type, a multicast communication
type or broadcast communication type; base station scheduling or autonomously selecting resources; bandwidth part ,BWP, information; a communication beam direction; or transmit power;
coverage measurement information comprising at least one of:
a base station configuration resource, a pre-configured resource, an operator managed resource, a non-operator managed resource, a limited service status, or information about time and geographic location at which a used resource type changes; and
mobility measurement information comprising at least one of:
a zone identification, geographic information of a zone, a time to enter the zone, a time of driving off from the zone, or a travel time or a residence time in the zone.

22. A device, comprising a processor, a memory, a communication unit, and a communication bus; wherein the communication bus is configured to enable connection and communication between the processor and the memory; and
the processor is configured to execute at least one first program stored in the memory to perform the driving test method of any one of claims 1 to 16; or
the processor is configured to execute at least one second program stored in the memory to perform the driving test control method of any one of claims 17 to 19.

23. A computer-readable storage medium storing at least one first computer program and at least one second computer program, wherein the at least one first computer program is executable by at least one processor to perform the driving test method of any one of claims 1 to 16; and the at least one second computer program is executable by at least one processor to perform the driving test control method of any one of claims 17 to 19.

## Patentansprüche

1. Fahrtestverfahren, das Folgendes umfasst:
Empfangen von Sidelink-Fahrtest-Konfigurationsinformationen von einer Konfigurationsseite durch ein Endgerät; Durchführen eines Fahrtests in einer Umgebung, in der sich ein Endgerät befindet, durch das Endgerät gemäß den Sidelink-Fahrtest-Konfigurationsinformationen, und Erhalten von Sidelink-Fahrtestinformationen; und Übermittlung der erhaltenen Informationen über den Sidelink-Fahrtest durch das Endgerät an die Konfigurationsseite;
wobei die Sidelink-Fahrtest-Konfigurationsinformationen ein Messelement umfassen, das mindestens eines der folgenden Elemente umfasst: Sidelink-Ressourcenpool-Überlastungsmessung, Sidelink-Ressourcenpool-Ressourcenkonfliktmessung, Abdeckungsmessung, Mobilitätsmessung, Synchronisationsmessung, semi-persistente Zeitplanung SPS, Nutzungsmessung oder Sidelink-Dienstqualitätsmessung QoS;
wobei die Sidelink-Fahrtestinformationen mindestens eines der folgenden Elemente umfassen:
Informationen über die Überlastungsmessung des Sidelink-Ressourcenpools;
Sidelink-QoS-Messinformationen, die mindestens eines der folgenden Elemente umfassen:
Information über das Messergebnis einer Blockfehlerrate BLER, auf der Grundlage eines gemeinsam genutzten physischen Nebenkanals PSSCH; Informationen über das Messergebnis einer BLER auf der Grundlage eines physischen Nebenstrecken-Kontrollkanals, PSCCH;
Messergebnisinformationen eines Datenvolumens auf der Grundlage eines logischen Sidelink-Kanals oder eines Sidelink-Trägers oder einer Pro-Paket-Priorität, PPPP, oder einer Pro-Paket-Zuverlässigkeit, PPPR, oder eines QoS-Identifikators der fünften Generation des Mobilkommunikationssystems, 5QI, zwischen einem Quell-Ziel-Paar;
Messergebnisinformationen eines Durchsatzes auf der Grundlage eines logischen Sidelink-Kanals oder eines Sidelink-Trägers oder eines PPPP oder eines PPPR oder eines 5QI zwischen einem Quell-Ziel-Paar, Messergebnisinformation einer Paketverzögerung auf der Grundlage eines logischen Sidelink-Kanals oder eines Sidelink-Trägers oder eines PPPP oder eines PPPR oder eines 5QI zwischen einem Quell-Ziel-Paar; Messergebnisinformation einer Paketverlustrate auf der Grundlage eines logischen Sidelink-Kanals oder eines Sidelink-Trägers oder eines PPPP oder eines PPPR oder eines 5QI zwischen einem Quell-Ziel-Paar; oder Messergebnisinformation einer Paketverwerfungsrate auf der Grundlage eines logischen Sidelink-Kanals oder eines Sidelink-Trägers oder eines PPPP oder eines PPPR oder eines 5QI zwischen einem Quell-Ziel-Paar; Nebenstrecken-Kommunikationsverkehrsinformationen, die mindestens eines der folgenden Elemente umfassen: eine Verkehrsart; eine Verkehrsartversion; eine Verkehrserzeugungs- oder Sendeperiode; eine verkehrsbezogene 5QI, PPPP, Verzögerung, Zuverlässigkeit, Übertragungsrate oder Übertragungsbereich; Verkehrsübertragungsfrequenzpunktinformationen; eine der Kommunikationsarten Unicast, Multicast oder Broadcast Basisstation, die die Ressourcen plant oder autonom auswählt, Informationen über den Bandbreitenanteil BWP, die Richtung eines Kommunikationsstrahls oder die Sendeleistung; Informationen zur Abdeckungsmessung, die mindestens eines der folgenden Elemente umfassen: eine Basisstationskonfigurationsressource, eine vorkonfigurierte Ressource, eine vom Betreiber verwaltete Ressource, eine nicht vom Betreiber verwaltete Ressource, einen eingeschränkten Dienststatus oder Informationen über die Zeit und den geografischen Ort, an dem sich ein verwendeter Ressourcentyp ändert; und
Informationen zur Mobilitätsmessung, die mindestens eines der folgenden Elemente umfassen:
eine Zonenkennung, geografische Informationen über eine Zone, eine Zeit für die Einfahrt in die Zone,
eine Zeit für die Ausfahrt aus der Zone oder eine Reisezeit oder eine Aufenthaltszeit in der Zone.

2. Verfahren nach Anspruch 1, wobei das Empfangen der Sidelink-Fahrtest-Konfigurationsinformationen von der Konfigurationsseite eines der folgenden Elemente umfasst:
Empfang der Konfigurationsinformationen für den Sidelink-Fahrversuch von einer Basisstation;
Empfang der Sidelink-Fahrtest-Konfigurationsinformationen von einem zentralisierten Datenverarbeitungszentrum an einem Zugangsnetzende; Empfang der Konfigurationsinformationen für den Sidelink-Fahrversuch von einem Speichermodul für Vorkonfigurationsinformationen;
Empfang der Informationen über die Konfiguration der Nebenstreckenfahrprüfung von einer straßenseitigen Einheit, RUS, oder einem Relaisknoten;
Empfangen der Sidelink-Fahrtest-Konfigurationsinformationen von einem lokalen Managementterminal oder einem Gruppenmanagementterminal; oder
Empfang der Sidelink-Konfigurationsinformationen von einem Proximity-Service-Terminal.

3. Verfahren nach Anspruch 1, wobei die Konfigurationsinformationen für den Sidelink-Fahrversuch ferner mindestens eines der folgenden Elemente umfassen: ein Messobjekt oder einen messungsbezogenen Parameter.

4. Verfahren nach Anspruch 3, wobei die Durchführung des Fahrversuchs in der Umgebung, in der sich das Endgerät befindet, gemäß der Sidelink-Fahrversuchs-Konfigurationsinformation mindestens eines der folgenden Elemente umfasst:
Durchführen einer Messung an einem entsprechenden Element der Umgebung, in der sich das Endgerät befindet, entsprechend dem Messelement, und Aufzeichnen eines Messergebnisses;
Bestimmung eines Messziels anhand des Messobjekts; oder
Durchführen einer Messung eines Umgebungsparameters der Umgebung, in der sich das Endgerät befindet, gemäß dem messungsbezogenen Parameter, und Aufzeichnen eines Messergebnisses.

5. Verfahren nach Anspruch 3, wobei das Messobjekt mindestens eines der folgenden Elemente umfasst: einen zu messenden Ressourcenpool, eine Messausführungszone, eine Zellenliste der Messausführungszone, einen zu messenden SPS-Konfigurationsindex, einen zu messenden Verkehrstyp oder eine messbare PLMN-Liste.

6. Verfahren nach Anspruch 3, wobei der messbezogene Parameter mindestens einen der folgenden Parameter umfasst: einen Schwellenwert für die CBR, der für die Messung der Überlastung des Sidelink-Ressourcenpools verwendet wird, einen Verzögerungsschwellenwert für die QoS-Messung auf dem Sidelink, einen Messzeitraum oder ein Messzeitintervall.

7. Verfahren nach Anspruch 3, wobei die Konfigurationsinformation für den Sidelink-Fahrversuch ferner eine Konfigurationsbedingung für die Messwertmeldung umfasst; und
das Melden der erhaltenen Sidelink-Fahrtestinformationen an die Konfigurationsseite umfasst:
als Reaktion darauf, dass die Sidelink-Fahrtest-Informationen die Messbericht-Konfigurationsbedingung erfüllen, die Sidelink-Fahrtest-Informationen an die Konfigurationsseite melden.

8. Verfahren nach Anspruch 7, wobei die Konfigurationsbedingung für die Messwertmeldung mindestens eines der folgenden Elemente umfasst: einen Meldezeitraum, einen durch ein Ereignis ausgelösten Meldeschwellenwert, einen durch ein Messobjekt ausgelösten Meldeschwellenwert oder einen Meldeinhalt.

9. Verfahren nach Anspruch 1, wobei die Sidelink-Fahrtestinformationen ferner mindestens eines der folgenden Elemente umfassen: Sidelink-Ressourcenpool-Ressourcenkonfliktinformationen, Synchronisationsmessinformationen, semi-persistente Ressourcennutzungsinformationen, Sidelink-Kanalqualitätsmessinformationen, messzeitbezogene Informationen, geografische Standortinformationen oder Endgeräte-Reiseinformationen.

10. Verfahren nach Anspruch 9, wobei die auf die Messzeit bezogene Information mindestens eine der folgenden Informationen umfasst: eine Startzeit der Messung, eine Stoppzeit der Messung, eine Messdauer, eine Messperiode oder eine Messintervallzeit.

11. Verfahren nach Anspruch 1, wobei das Melden der erhaltenen Sidelink-Fahrtestinformationen an die Konfigurationsseite umfasst:
Senden eines Hinweises auf eine Nebenstrecken-Fahrprüfung an die Konfigurationsseite;
Erhalten einer Anforderung für einen Sidelink-Kommunikationstestbericht von der Konfigurationsseite; und
Senden der Sidelink-Fahrtest-Informationen an die Konfigurationsseite gemäß der Sidelink-Kommunikations-Fahrtest-Berichtsanforderung.

12. Verfahren nach Anspruch 11, wobei die Konfigurationsseite mindestens eines der folgenden Elemente umfasst: eine Basisstation, ein zentralisiertes Datenverarbeitungszentrum an einem Zugangsnetzende, ein Speichermodul für Vorkonfigurationsinformationen, einen Relaisknoten, eine RSU, ein lokales Managementterminal oder ein Gruppenmanagementterminal oder ein Proximity-Service-Terminal.

13. Verfahren nach einem der Ansprüche 1 bis 12, das vor dem Empfang der Sidelink-Fahrtest-Konfigurationsinformationen von der Konfigurationsseite durch das Endgerät ferner Folgendes umfasst:
Senden von Sidelink-Antriebstest-Aktivierungsinformationen durch eine erste Kernkonfigurationsseite an die Konfigurationsseite; und
Aktivieren der Konfigurationsseite durch die Konfigurationsseite entsprechend der Aktivierungsinformation für den Seitentest und Senden der Konfigurationsinformation für den Seitentest an das Endgerät.

14. Verfahren nach Anspruch 13, wobei die Informationen zur Aktivierung des Sidelink-Fahrtests mindestens einen der folgenden Parameter umfassen: eine Sidelink-Fahrtestanweisung, eine Sidelink-QoS-Vorhersageanweisung, ein Sidelink-Messobjekt, eine Sidelink-Messverkehrsart, eine Trace-Identifikation, eine PLMN-Liste, eine Protokolldauer, ein Protokollintervall, ein Messzeitraum, ein Berichtszeitraum, ein Berichtsauslöser oder ein Ereignisschwellenwert.

15. Verfahren nach einem der Ansprüche 1 bis 12, das vor dem Empfang der Sidelink-Fahrtest-Konfigurationsinformationen von der Konfigurationsseite durch das Endgerät ferner Folgendes umfasst:
Senden von Informationen über die Bereitschaft für einen Sidelink-Antriebstest durch eine zweite Kernkonfigurationsseite an die Konfigurationsseite; und
durch die Konfigurationsseite ein geeignetes Fahrprüfungsterminal entsprechend der Information über die Bereitschaft für die Fahrprüfung im Seitenverkehr zu finden.

16. Verfahren nach Anspruch 15, wobei die Information über die Bereitschaft zur Durchführung eines Sidelink-Fahrversuchs mindestens eines der folgenden Elemente umfasst: Bereitschaft zur Durchführung eines Sidelink-Fahrversuchs, Bereitschaft zur Meldung von Sidelink-Fahrversuchsinformationen, Bereitschaft zur zeitnahen oder sofortigen Durchführung eines Sidelink-Fahrversuchs, Bereitschaft zur Protokollierung eines Sidelink-Fahrversuchs, Bereitschaft zur Durchführung eines Sidelink-Fahrversuchs für Unicast-, Multicast- oder Broadcast-Kommunikation oder eine PLMN-Liste für den Anwendungsbereich.

17. Verfahren zur Kontrolle von Fahrversuchen, umfassend:
Senden von Sidelink-Fahrtest-Konfigurationsinformationen durch eine Konfigurationsseite an ein Endgerät, wobei die Sidelink-Fahrtest-Konfigurationsinformationen zum Steuern des Endgeräts verwendet werden, um einen Fahrtest in einer Umgebung durchzuführen, in der sich das Endgerät befindet, um Sidelink-Fahrtestinformationen zu erhalten; und
Empfang der Informationen über den Sidelink-Fahrtest vom Endgerät durch die Konfigurationsseite;
wobei die Sidelink-Fahrtest-Konfigurationsinformationen ein Messelement umfassen, das mindestens eines der folgenden Elemente umfasst: Sidelink-Ressourcenpool-Überlastungsmessung, Sidelink-Ressourcenpool-Ressourcenkonfliktmessung, Abdeckungsmessung, Mobilitätsmessung, Synchronisationsmessung, semi-persistente Zeitplanung SPS, Nutzungsmessung oder Sidelink-Dienstqualitätsmessung QoS);
wobei die Sidelink-Fahrtestinformationen mindestens eines der folgenden Elemente umfassen:
Informationen über die Überlastungsmessung des Sidelink-Ressourcenpools;
Sidelink-QoS-Messinformationen, die mindestens eines der folgenden Elemente umfassen:
Information über das Messergebnis einer Blockfehlerrate BLER auf der Grundlage eines gemeinsam genutzten physischen Nebenkanals PSSCH;
Informationen über das Messergebnis einer BLER auf der Grundlage eines physischen Nebenstrecken-Kontrollkanals, PSCCH;
Messergebnisinformationen eines Datenvolumens auf der Grundlage eines logischen Sidelink-Kanals oder eines Sidelink-Trägers oder einer Pro-Paket-Priorität, PPPP, oder einer Pro-Paket-Zuverlässigkeit, PPPR, oder eines QoS-Identifikators der fünften Generation des Mobilkommunikationssystems, 5QI, zwischen einem Quell-Ziel-Paar;
Messergebnisinformationen eines Durchsatzes auf der Grundlage eines logischen Sidelink-Kanals oder eines Sidelink-Trägers oder eines PPPP oder eines PPPR oder eines 5QI zwischen einem Quell-Ziel-Paar; Messergebnisinformation einer Paketverzögerung auf der Grundlage eines logischen Sidelink-Kanals oder eines Sidelink-Trägers oder eines PPPP oder eines PPPR oder eines 5QI zwischen einem Quell-Ziel-Paar; Messergebnisinformation einer Paketverlustrate auf der Grundlage eines logischen Sidelink-Kanals oder eines Sidelink-Trägers oder eines PPPP oder eines PPPR oder eines 5QI zwischen einem Quell-Ziel-Paar; oder Messergebnisinformation einer Paketverwerfungsrate auf der Grundlage eines logischen Sidelink-Kanals oder eines Sidelink-Trägers oder eines PPPP oder eines PPPR oder eines 5QI zwischen einem Quell-Ziel-Paar; und Nebenstrecken-Kommunikationsverkehrsinformationen,
die mindestens eines der folgenden Elemente umfassen: einen Verkehrstyp; eine Verkehrstypversion; einen Zeitraum für die Verkehrserzeugung oder -übertragung; einen der folgenden verkehrsbezogenen Parameter: 5QI, PPPP, Verzögerung, Zuverlässigkeit, Übertragungsrate oder Übertragungsreichweite; Informationen zur Verkehrsübertragungsfrequenz; einen der folgenden Kommunikationstypen: Unicast, Multicast oder Broadcast Typ, die Planung der Basisstation oder die autonome Auswahl der Ressourcen, die Information über den Bandbreitenanteil BWP, die Richtung des Kommunikationsstrahls oder die Sendeleistung; Informationen zur Abdeckungsmessung, die mindestens eines der folgenden Elemente umfassen:
eine Basisstationskonfigurationsressource, eine vorkonfigurierte Ressource, eine vom Betreiber verwaltete Ressource, eine nicht vom Betreiber verwaltete Ressource, einen eingeschränkten Dienststatus oder Informationen über die Zeit und den geografischen Ort, an dem sich ein verwendeter Ressourcentyp ändert; und
Informationen zur Mobilitätsmessung, die mindestens eines der folgenden Elemente umfassen:
eine Zonenkennung, geografische Informationen über eine Zone, eine Zeit für die Einfahrt in die Zone, eine Zeit für die Ausfahrt aus der Zone oder eine Reisezeit oder eine Aufenthaltszeit in der Zone.

18. Verfahren nach Anspruch 17, ferner umfassend: Empfangen von Sidelink-Fahrtest-Aktivierungsinformationen von einer ersten Kernkonfigurationsseite, wobei die Sidelink-Fahrtest-Aktivierungsinformationen zum Steuern der Konfigurationsseite verwendet werden, um die Sidelink-Fahrtest-Konfigurationsinformationen an das Endgerät zu senden; und die Durchführung der Zulassungssteuerung und Ressourcenplanung auf einer Benutzerausrüstung, UE, PC5-Übertragung des Endgeräts gemäß einem UE PC5 Dienstgüte, QoS, -bezogenen Parameter.

19. Verfahren nach Anspruch 17, ferner umfassend: Empfangen von Informationen über die Bereitschaft zu Nebenstreckenfahrprüfungen von einer zweiten Kernkonfigurationsseite, wobei die Informationen über die Bereitschaft zu Nebenstreckenfahrprüfungen zur Steuerung der Konfigurationsseite verwendet werden, um ein geeignetes Fahrprüfungsterminal anzupassen.

20. Fahrtestgerät, das Folgendes umfasst:
ein erstes Empfangsmodul, das so konfiguriert ist, dass es Sidelink-Fahrtest-Konfigurationsinformationen von einer Konfigurationsseite empfängt;
ein Fahrtestmodul, das so konfiguriert ist, dass es einen Fahrtest in einer Umgebung, in der sich ein Endgerät befindet, gemäß der Sidelink-Fahrtest-Konfigurationsinformation durchführt und Sidelink-Fahrtestinformationen erhält; und
ein Meldemodul, das so konfiguriert ist, dass es die erhaltenen Informationen über den Sidelink-Fahrtest an die Konfigurationsseite meldet,
wobei die Sidelink-Fahrtest-Konfigurationsinformationen ein Messelement umfassen, das mindestens eines der folgenden Elemente umfasst: Sidelink-Ressourcenpool-Überlastungsmessung, Sidelink-Ressourcenpool-Ressourcenkonfliktmessung, Abdeckungsmessung, Mobilitätsmessung, Synchronisationsmessung, semi-persistente Zeitplanung SPS, Nutzungsmessung oder Sidelink-Dienstqualitätsmessung, QoS;
wobei die Sidelink-Fahrtestinformationen mindestens eines der folgenden Elemente umfassen:
Informationen über die Überlastungsmessung des Sidelink-Ressourcenpools;
Sidelink-QoS-Messinformationen, die mindestens eines der folgenden Elemente umfassen:
Information über das Messergebnis einer Blockfehlerrate BLER auf der Grundlage eines gemeinsam genutzten physischen Nebenkanals PSSCH;
Informationen über das Messergebnis einer BLER auf der Grundlage eines physischen Nebenstrecken-Kontrollkanals, PSCCH;
Messergebnisinformationen eines Datenvolumens auf der Grundlage eines logischen Sidelink-Kanals oder eines Sidelink-Trägers oder einer Pro-Paket-Priorität, PPPP, oder einer Pro-Paket-Zuverlässigkeit, PPPR, oder eines QoS-Identifikators der fünften Generation des Mobilkommunikationssystems, 5QI, zwischen einem Quell-Ziel-Paar;
Messergebnisinformationen eines Durchsatzes auf der Grundlage eines logischen Sidelink-Kanals oder eines Sidelink-Trägers oder eines PPPP oder eines PPPR oder eines 5QI zwischen einem Quell-Ziel-Paar; Messergebnisinformation einer Paketverzögerung auf der Grundlage eines logischen Sidelink-Kanals oder eines Sidelink-Trägers oder eines PPPP oder eines PPPR oder eines 5QI zwischen einer Quelle und einem Ziel pair, Messergebnisinformation einer Paketverlustrate auf der Grundlage eines logischen Sidelink-Kanals oder eines Sidelink-Trägers oder eines PPPP oder eines PPPR oder eines 5QI zwischen einem Quell-Ziel-Paar; oder Messergebnisinformation einer Paketverwerfungsrate auf der Grundlage eines logischen Sidelink-Kanals oder eines Sidelink-Trägers oder eines PPPP oder eines PPPR oder eines 5QI zwischen einem Quell-Ziel-Paar; Nebenstrecken-Kommunikationsverkehrsinformationen, die mindestens eines der folgenden Elemente umfassen: eine Verkehrsart; eine Verkehrsartversion; eine Verkehrserzeugungs- oder Sendeperiode; eine verkehrsassoziierte 5QI-, PPPP-, Verzögerungs-, Zuverlässigkeits-, Übertragungsrate- oder Übertragungsreichweite-Information; eine Verkehrsübertragungsfrequenzpunkt-Information; eine Unicast-Kommunikationsart, eine Multicast-Kommunikationsart oder eine Broadcast-Kommunikationsart; eine Basisstationsplanung oder eine autonome Ressourcenauswahl; eine Bandbreitenteil-, BWP-Information; eine Kommunikationsstrahlrichtung; oder eine Sendeleistung;
Informationen zur Abdeckungsmessung, die mindestens eines der folgenden Elemente umfassen:
eine Basisstationskonfigurationsressource, eine vorkonfigurierte Ressource, eine vom Betreiber verwaltete Ressource, eine nicht vom Betreiber verwaltete Ressource, einen eingeschränkten Dienststatus oder Informationen über die Zeit und den geografischen Ort, an dem sich ein verwendeter Ressourcentyp ändert; und
Informationen zur Mobilitätsmessung, die mindestens eines der folgenden Elemente umfassen:
eine Zonenkennung, geografische Informationen über eine Zone, eine Zeit für die Einfahrt in die Zone, eine Zeit für die Ausfahrt aus der Zone oder eine Reisezeit oder eine Aufenthaltszeit in der Zone.

21. Fahrprüfungs-Kontrollgerät, das Folgendes umfasst: ein Sendemodul, das so konfiguriert ist, dass es über eine Konfigurationsseite Sidelink-Fahrtest-Konfigurationsinformationen an ein Endgerät sendet, wobei die Sidelink-Fahrtest-Konfigurationsinformationen zur Steuerung des Endgeräts verwendet werden, um einen Fahrtest in einer Umgebung durchzuführen, in der sich das Endgerät befindet, und um Sidelink-Fahrtestinformationen zu erhalten; und
ein zweites Empfangsmodul, das so konfiguriert ist, dass es die Sidelink-Fahrtestinformationen von dem Endgerät empfängt;
wobei die Sidelink-Fahrtest-Konfigurationsinformationen ein Messelement umfassen, das mindestens eines der folgenden Elemente umfasst: Sidelink-Ressourcenpool-Überlastungsmessung, Sidelink-Ressourcenpool-Ressourcenkonfliktmessung, Abdeckungsmessung, Mobilitätsmessung, Synchronisationsmessung, semi-persistente Zeitplanung SPS, Nutzungsmessung oder Sidelink-Dienstqualitätsmessung QoS;
wobei die Sidelink-Fahrtestinformationen mindestens eines der folgenden Elemente umfassen:
Informationen über die Überlastungsmessung des Sidelink-Ressourcenpools;
Sidelink-QoS-Messinformationen, die mindestens eines der folgenden Elemente umfassen:
Information über das Messergebnis einer Blockfehlerrate BLER auf der Grundlage eines gemeinsam genutzten physischen Nebenkanals PSSCH;
Informationen über das Messergebnis einer BLER auf der Grundlage eines physischen Nebenstrecken-Kontrollkanals, PSCCH;
Messergebnisinformationen eines Datenvolumens auf der Grundlage eines logischen Sidelink-Kanals oder eines Sidelink-Trägers oder einer Pro-Paket-Priorität, PPPP, oder einer Pro-Paket-Zuverlässigkeit, PPPR, oder eines QoS-Identifikators der fünften Generation des Mobilkommunikationssystems, 5QI, zwischen einem Quell-Ziel-Paar;
Messergebnisinformationen eines Durchsatzes auf der Grundlage eines logischen Sidelink-Kanals oder eines Sidelink-Trägers oder eines PPPP oder eines PPPR oder eines 5QI zwischen einem Quell-Ziel-Paar; Messergebnisinformation einer Paketverzögerung auf der Grundlage eines logischen Sidelink-Kanals oder eines Sidelink-Trägers oder eines PPPP oder eines PPPR oder eines 5QI zwischen einem Quell-Ziel-Paar; Messergebnisinformation einer Paketverlustrate auf der Grundlage eines logischen Sidelink-Kanals oder eines Sidelink-Trägers oder eines PPPP oder eines PPPR oder eines 5QI zwischen einem Quell-Ziel-Paar; oder Messergebnisinformation einer Paketverwerfungsrate auf der Grundlage eines logischen Sidelink-Kanals oder eines Sidelink-Trägers oder eines PPPP oder eines PPPR oder eines 5QI zwischen einem Quell-Ziel-Paar; und Nebenstrecken-Kommunikationsverkehrsinformationen, die mindestens eines der folgenden Elemente umfassen: eine Verkehrsart; eine Verkehrsartversion; eine Verkehrserzeugungs- oder Sendeperiode; eine verkehrsassoziierte 5QI-, PPPP-, Verzögerungs-, Zuverlässigkeits-, Übertragungsrate- oder Übertragungsreichweite-Information; eine Verkehrsübertragungsfrequenzpunkt-Information; eine Unicast-Kommunikationsart, eine Multicast-Kommunikationsart oder eine Broadcast-Kommunikationsart; eine Basisstationsplanung oder eine autonome Ressourcenauswahl; eine Bandbreitenteil-, BWP-Information; eine Kommunikationsstrahlrichtung; oder eine Sendeleistung;
Informationen zur Abdeckungsmessung, die mindestens eines der folgenden Elemente umfassen:
eine Basisstationskonfigurationsressource, eine vorkonfigurierte Ressource, eine vom Betreiber verwaltete Ressource, eine nicht vom Betreiber verwaltete Ressource, einen eingeschränkten Dienststatus oder Informationen über die Zeit und den geografischen Ort, an dem sich ein verwendeter Ressourcentyp ändert; und
Informationen zur Mobilitätsmessung, die mindestens eines der folgenden Elemente umfassen:
eine Zonenkennung, geografische Informationen über eine Zone, eine Zeit für die Einfahrt in die Zone,
eine Zeit für die Ausfahrt aus der Zone oder eine Reisezeit oder eine Aufenthaltszeit in der Zone.

22. Vorrichtung, die einen Prozessor, einen Speicher, eine Kommunikationseinheit und einen Kommunikationsbus umfasst; wobei der Kommunikationsbus so konfiguriert ist, dass er eine Verbindung und Kommunikation zwischen dem Prozessor und dem Speicher ermöglicht; und
der Prozessor so konfiguriert ist, dass er mindestens ein erstes im Speicher gespeichertes Programm ausführt, um das Fahrtestverfahren nach einem der Ansprüche 1 bis 16 durchzuführen; oder
der Prozessor so konfiguriert ist, dass er mindestens ein zweites im Speicher gespeichertes Programm ausführt, um das Fahrprüfungssteuerungsverfahren nach einem der Ansprüche 17 bis 19 durchzuführen.

23. Computerlesbares Speichermedium, das mindestens ein erstes Computerprogramm und mindestens ein zweites Computerprogramm speichert, wobei das mindestens eine erste Computerprogramm von mindestens einem Prozessor ausgeführt werden kann, um das Fahrtestverfahren nach einem der Ansprüche 1 bis 16 durchzuführen; und
das mindestens eine zweite Computerprogramm von mindestens einem Prozessor ausgeführt werden kann, um das Fahrprüfungssteuerungsverfahren nach einem der Ansprüche 17 bis 19 durchzuführen.

## Revendications

1. Procédé d'essai de conduite comprenant:
la réception, par un terminal, d'informations de configuration de test de conduite par liaison latérale provenant d'un côté de la configuration; l'exécution, par le terminal, d'un test de conduite dans un environnement où se trouve un terminal en fonction des informations de configuration de test de conduite par liaison latérale, et l'obtention d'informations de test de conduite par liaison latérale; et
communiquer, par le terminal, les informations obtenues sur l'essai de conduite par liaison latérale au côté configuration;
dans lequel les informations de configuration de l'essai de conduite par liaison latérale comprennent un élément de mesure comprenant au moins l'un des éléments suivants: mesure de l'encombrement du pool de ressources de la liaison latérale, mesure du conflit de ressources du pool de ressources de la liaison latérale, mesure de la couverture, mesure de la mobilité, mesure de la synchronisation, mesure de l'utilisation de l'ordonnancement semi-persistant SPS, ou mesure de la qualité de service QoS, de la liaison latérale;
dans lequel les informations relatives à l'essai de conduite par liaison latérale comprennent au moins l'un des éléments suivants:
les informations de mesure de l'encombrement du pool de ressources de liaison latérale;
des informations de mesure de la qualité de service QoS, de la liaison latérale comprenant au moins l'un des éléments suivants:
des informations sur le résultat de la mesure d'un taux d'erreur de bloc, BLER, basé sur un canal physique de partage de liaison latérale, PSSCH;
des informations sur le résultat de la mesure d'un BLER basé sur un canal de contrôle de liaison latérale physique, PSCCH;
des informations sur le résultat de la mesure d'un volume de données basé sur un canal logique de liaison latérale, ou un support de liaison latérale, ou une priorité de prose par paquet, PPPP, ou une fiabilité de prose par paquet, PPPR, ou un identificateur QoS du système de communication mobile de cinquième génération, 5QI, entre une paire source-cible;
des informations sur le résultat de la mesure d'un débit basé sur un canal logique de liaison latérale, ou un support de liaison latérale, ou un PPPP, ou un PPPR, ou un 5QI entre une paire source-cible;
des informations sur le résultat de la mesure d'un retard de paquet basé sur un canal logique de liaison latérale, ou un support de liaison latérale, ou un PPPP, ou un PPPR, ou un 5QI entre une paire source-cible;
des informations sur le résultat de la mesure d'un taux de perte de paquets basé sur un canal logique de liaison latérale, ou un support de liaison latérale, ou un PPPP, ou un PPPR, ou un 5QI entre une paire source-cible; ou
des informations sur le résultat de la mesure d'un taux de rejet de paquets basé sur un canal logique de liaison latérale, ou un support de liaison latérale, ou un PPPP, ou un PPPR, ou un 5QI entre une paire source-cible;
des informations sur le trafic de la liaison latérale comprenant au moins l'un des éléments suivants:
un type de trafic; une version de type de trafic; une période de génération ou d'envoi de trafic; l'un des 5QI, PPPP, délais, fiabilité, taux de transmission ou portée de transmission associés au trafic; informations sur les points de fréquence de transmission du trafic; un type de communication unicast, un type de communication multicast ou un type de communication broadcast; programmation de la station de base ou la sélection autonome des ressources; des informations sur la partie de la largeur de bande BWP; la direction du faisceau de communication; ou la puissance d'émission;
des informations sur la mesure de la couverture comprenant au moins l'un des éléments suivants:
une ressource de configuration de la station de base, une ressource préconfigurée, une ressource gérée par l'opérateur, une ressource gérée par un non-opérateur, un état de service limité, ou des informations relatives à l'heure et à l'emplacement géographique auxquels un type de ressource utilisée change; et
les informations de mesure de la mobilité comprenant au moins l'un des éléments suivants:
une identification de la zone, des informations géographiques sur la zone, une heure d'entrée dans la zone, une heure de sortie de la zone, ou une durée de voyage ou de séjour dans la zone.

2. Procédé selon la revendication 1, dans lequel la réception des informations de configuration de l'essai de conduite par liaison latérale à partir du côté configuration comprend l'un des éléments suivants:
recevoir les informations de configuration du test de conduite par liaison latérale d'une station de base; recevoir les informations de configuration de l'essai de conduite par liaison latérale d'un centre de traitement des données centralisé à l'extrémité d'un réseau d'accès;
recevoir les informations de configuration de l'essai de conduite par liaison latérale à partir d'un module de stockage d'informations de préconfiguration; recevoir les informations de configuration de l'essai de conduite par liaison latérale d'une unité de bord de route, RUS, ou d'un nœud de relais;
recevoir les informations de configuration du test de conduite par liaison latérale d'un terminal de gestion local ou d'un terminal de gestion de groupe; ou recevoir les informations de configuration de l'essai de conduite par liaison latérale d'un terminal de service de proximité.

3. Procédé selon la revendication 1, dans lequel les informations de configuration de l'essai de conduite par liaison latérale comprennent en outre au moins l'un des éléments suivants: un objet de mesure ou un paramètre lié à la mesure.

4. Procédé selon la revendication 3, dans lequel l'exécution de l'essai de conduite dans l'environnement où se trouve le terminal en fonction des informations de configuration de l'essai de conduite par liaison latérale comprend au moins l'un des éléments suivants:
effectuer des mesures sur un élément correspondant de l'environnement où se trouve le terminal en fonction de l'élément de mesure, et enregistrer un résultat de mesure;
déterminer une cible de mesure en fonction de l'objet de mesure; ou
effectuer des mesures sur un paramètre de l'environnement où se trouve le terminal en fonction du paramètre lié à la mesure, et enregistrer un résultat de mesure.

5. Procédé selon la revendication 3, dans lequel l'objet de mesure comprend au moins l'un des éléments suivants: un pool de ressources à mesurer, une zone d'exécution de la mesure, une liste de cellules de la zone d'exécution de la mesure, un indice de configuration SPS à mesurer, un type de trafic à mesurer ou une liste de réseaux mobiles terrestres publics PLMN, mesurables.

6. Procédé selon la revendication 3, dans lequel le paramètre relatif à la mesure comprend au moins un des éléments suivants: un seuil de taux d'occupation du canal CBR, utilisé pour mesurer l'encombrement du pool de ressources de la liaison latérale, un seuil de retard pour mesurer la qualité de service QoS de la liaison latérale, une période de mesure ou un intervalle de temps de mesure.

7. Procédé selon la revendication 3, dans lequel les informations de configuration du test de conduite par liaison latérale comprennent en outre une condition de configuration de rapport de mesure; et
la communication des informations obtenues sur l'essai de conduite par liaison latérale au côté configuration comprend:
en réponse à l'information d'essai de conduite par liaison latérale satisfaisant à la condition de configuration de rapport de mesure, signaler l'information d'essai de conduite par liaison latérale au côté configuration.

8. Procédé selon la revendication 7, dans lequel la condition de configuration du rapport de mesure comprend au moins l'un des éléments suivants: une période de rapport, un seuil de rapport déclenché par un événement, un seuil de rapport déclenché par un élément de mesure ou un contenu de rapport.

9. Procédé selon la revendication 1, dans lequel les informations d'essai de conduite par liaison latérale comprennent en outre au moins l'une des informations suivantes: informations de conflit de ressources du pool de ressources de la liaison latérale, informations de mesure de la synchronisation, informations d'utilisation des ressources semi-persistantes, informations de mesure de la qualité du canal de la liaison latérale, informations liées au temps de mesure, informations de localisation géographique ou informations sur les déplacements du terminal.

10. Procédé selon la revendication 9, dans lequel les informations relatives au temps de mesure comprennent au moins l'un des éléments suivants: heure de début de la mesure, heure de fin de la mesure, durée de la mesure, période de mesure ou durée de l'intervalle de mesure.

11. Procédé selon la revendication 1, dans lequel la communication des informations obtenues sur l'essai de conduite par liaison latérale au côté configuration comprend:
envoi d'une indication d'information sur l'essai de conduite par liaison latérale au côté configuration; obtenir une demande de rapport de test de conduite de communication par liaison latérale du côté configuration; et
envoyer les informations relatives à l'essai de conduite par liaison latérale au côté configuration, conformément à la demande de rapport sur l'essai de conduite par communication par liaison latérale.

12. Procédé selon la revendication 11, dans lequel le côté configuration comprend au moins l'un des éléments suivants: une station de base, un centre de traitement des données centralisé à une extrémité du réseau d'accès, un module de stockage des informations de préconfiguration, un nœud de relais, une RSU, un terminal de gestion locale ou un terminal de gestion de groupe, ou un terminal de service de proximité.

13. Procédé de l'une des revendications 1 à 12, avant de recevoir, par le terminal, les informations de configuration du test de conduite par liaison latérale du côté configuration, comprend en outre:
envoi, par un premier côté de configuration du noyau, d'informations sur l'activation du test de conduite par liaison latérale au côté de configuration; et activer, par le côté configuration, le côté configuration en fonction des informations d'activation du test de conduite par liaison latérale, et envoyer les informations de configuration du test de conduite par liaison latérale au terminal.

14. Procédé selon la revendication 13, dans lequel les informations d'activation du test de conduite de la liaison latérale comprennent au moins un des éléments suivants: une instruction de test de conduite de liaison latérale, une instruction de prédiction de QoS de liaison latérale, un élément de mesure de liaison latérale, un type de trafic de mesure de liaison latérale, une identification de trace, une liste PLMN, une durée d'enregistrement, un intervalle d'enregistrement, une période de mesure, une période de rapport, un déclencheur de rapport ou un seuil d'événement.

15. Procédé de l'une des revendications 1 à 12, avant de recevoir, par le terminal, les informations de configuration du test de conduite par liaison latérale du côté configuration, comprend en outre:
envoi, par un deuxième côté de configuration du noyau, d'informations sur la volonté de test de conduite de liaison latérale au côté de configuration; et
faire correspondre, par le biais de la configuration, un terminal d'examen de conduite approprié en fonction des informations relatives à la volonté d'examen de conduite par liaison latérale.

16. Procédé selon la revendication 15, dans lequel les informations relatives à la volonté d'effectuer un test de conduite par liaison latérale comprennent au moins l'un des éléments suivants: volonté d'exécuter un test de conduite par liaison latérale, volonté de communiquer des informations relatives à un test de conduite par liaison latérale, volonté d'effectuer un test de conduite par liaison latérale en temps voulu ou immédiatement, volonté d'enregistrer un test de conduite par liaison latérale, volonté d'effectuer un test de conduite par liaison latérale en monodiffusion, en multidiffusion ou en diffusion, ou liste PLMN de l'étendue de l'application.

17. Procédé de contrôle de l'épreuve de conduite, comprenant:
envoyer, par un côté configuration, des informations de configuration de test de conduite par liaison latérale à un terminal, les informations de configuration de test de conduite par liaison latérale étant utilisées pour contrôler le terminal afin qu'il effectue un test de conduite dans un environnement où le terminal est situé pour obtenir des informations de test de conduite par liaison latérale; et
réception, par le côté configuration, des informations relatives à l'essai de conduite par liaison latérale en provenance du terminal;
dans lequel les informations de configuration de l'essai de conduite par liaison latérale comprennent un élément de mesure comprenant au moins l'un des éléments suivants: mesure de l'encombrement du pool de ressources de la liaison latérale, mesure du conflit de ressources du pool de ressources de la liaison latérale, mesure de la couverture, mesure de la mobilité, mesure de la synchronisation, mesure de l'utilisation de l'ordonnancement semi-persistant SPS, ou mesure de la qualité de service QoS de la liaison latérale;
dans lequel les informations relatives à l'essai de conduite par liaison latérale comprennent au moins l'un des éléments suivants:
les informations de mesure de l'encombrement du pool de ressources de liaison latérale;
des informations de mesure de la qualité de service QoS de la liaison latérale comprenant au moins l'un des éléments suivants:
des informations sur le résultat de la mesure d'un taux d'erreur de bloc, BLER, basé sur un canal physique de partage de liaison latérale, PSSCH;
des informations sur le résultat de la mesure d'un BLER basé sur un canal de contrôle de liaison latérale physique, PSCCH;
des informations sur le résultat de la mesure d'un volume de données basé sur un canal logique de liaison latérale, ou un support de liaison latérale, ou une priorité de prose par paquet, PPPP, ou une fiabilité de prose par paquet, PPPR, ou un identificateur QoS du système de communication mobile de cinquième génération, 5QI, entre une paire source-cible;
des informations sur le résultat de la mesure d'un débit basé sur un canal logique de liaison latérale, ou un support de liaison latérale, ou un PPPP, ou un PPPR, ou un 5QI entre une paire source-cible;
des informations sur le résultat de la mesure d'un retard de paquet basé sur un canal logique de liaison latérale, ou un support de liaison latérale, ou un PPPP, ou un PPPR, ou un 5QI entre une paire source-cible;
des informations sur le résultat de la mesure d'un taux de perte de paquets basé sur un canal logique de liaison latérale, ou un support de liaison latérale, ou un PPPP, ou un PPPR, ou un 5QI entre une paire source-cible; ou
des informations sur le résultat de la mesure d'un taux de rejet de paquets basé sur un canal logique de liaison latérale, ou un support de liaison latérale, ou un PPPP, ou un PPPR, ou un 5QI entre une paire source-cible; et
des informations sur le trafic de la liaison latérale comprenant au moins l'un des éléments suivants:
un type de trafic; une version de type de trafic; une période de génération ou d'envoi du trafic; un paramètre parmi 5QI, PPPP, délai, fiabilité, débit de transmission ou portée de transmission associé au trafic; des informations sur le point de fréquence de transmission du trafic; un type de communication unicast ou un type de communication multicast; la programmation de la station de base ou la sélection autonome des ressources; l'information sur la partie de la largeur de bande BWP; la direction du faisceau de communication; ou la puissance d'émission;
des informations sur la mesure de la couverture comprenant au moins l'un des éléments suivants:
une ressource de configuration de la station de base, une ressource préconfigurée, une ressource gérée par l'opérateur, une ressource gérée par un non-opérateur, un état de service limité, ou des informations relatives à l'heure et à l'emplacement géographique auxquels un type de ressource utilisée change; et
les informations de mesure de la mobilité comprenant au moins l'un des éléments suivants:
une identification de la zone, des informations géographiques sur la zone, une heure d'entrée dans la zone, une heure de sortie de la zone, ou une durée de voyage ou de séjour dans la zone.

18. Procédé selon la revendication 17, comprenant en outre:
recevoir des informations d'activation de test de conduite par liaison latérale d'un premier côté de configuration du noyau, les informations d'activation de test de conduite par liaison latérale étant utilisées pour contrôler le côté de configuration afin d'envoyer les informations de configuration de test de conduite par liaison latérale au terminal; et d'effectuer un contrôle d'admission et une programmation des ressources sur une transmission PC5 d'un équipement d'utilisateur UE, du terminal en fonction d'un paramètre lié à la qualité de service QoS de l'UE PC5.

19. Procédé selon la revendication 17, comprenant en outre:
recevoir des informations sur la volonté d'effectuer un test de conduite en liaison latérale à partir d'un deuxième côté de configuration du noyau, les informations sur la volonté d'effectuer un test de conduite en liaison latérale étant utilisées pour contrôler le côté de configuration afin qu'il corresponde à un terminal de test de conduite approprié.

20. Un appareil d'essai de conduite, comprenant:
un premier module de réception, configuré pour recevoir les informations de configuration de l'essai de conduite par liaison latérale d'un côté de la configuration;
un module d'essai de conduite, configuré pour effectuer un essai de conduite dans un environnement où se trouve un terminal en fonction des informations de configuration de l'essai de conduite par liaison latérale, et pour obtenir des informations d'essai de conduite par liaison latérale; et
un module de rapport, configuré pour communiquer les informations obtenues lors de l'essai de conduite par liaison latérale à la partie configuration;
dans lequel les informations de configuration de l'essai de conduite par liaison latérale comprennent un élément de mesure comprenant au moins l'un des éléments suivants: mesure de l'encombrement du pool de ressources de la liaison latérale, mesure du conflit de ressources du pool de ressources de la liaison latérale, mesure de la couverture, mesure de la mobilité, mesure de la synchronisation, mesure de l'utilisation de l'ordonnancement semi-persistant SPS ou mesure de la qualité de service QoS de la liaison latérale;
dans lequel les informations relatives à l'essai de conduite par liaison latérale comprennent au moins l'un des éléments suivants:
les informations de mesure de l'encombrement du pool de ressources de liaison latérale;
des informations de mesure de la qualité de service de la liaison latérale comprenant au moins l'un des éléments suivants:
des informations sur le résultat de la mesure d'un taux d'erreur de bloc, BLER, basé sur un canal physique de partage de liaison latérale, PSSCH;
des informations sur le résultat de la mesure d'un BLER basé sur un canal de contrôle de liaison latérale physique, PSCCH;
des informations sur le résultat de la mesure d'un volume de données basé sur un canal logique de liaison latérale, ou un support de liaison latérale, ou une priorité de prose par paquet, PPPP, ou une fiabilité de prose par paquet, PPPR, ou un identificateur QoS du système de communication mobile de cinquième génération, 5QI, entre une paire source-cible;
des informations sur le résultat de la mesure d'un débit basé sur un canal logique de liaison latérale, ou un support de liaison latérale, ou un PPPP, ou un PPPR, ou un 5QI entre une paire source-cible; informations sur le résultat de la mesure d'un retard de paquet basé sur un canal logique de liaison latérale, ou un support de liaison latérale, ou un PPPP, ou un PPPR, ou un 5QI entre une source et une cible pair;
des informations sur le résultat de la mesure d'un taux de perte de paquets basé sur un canal logique de liaison latérale, ou un support de liaison latérale, ou un PPPP, ou un PPPR, ou un 5QI entre une paire source-cible; ou
des informations sur le résultat de la mesure d'un taux de rejet de paquets basé sur un canal logique de liaison latérale, ou un support de liaison latérale, ou un PPPP, ou un PPPR, ou un 5QI entre une paire source-cible;
des informations sur le trafic de la liaison latérale comprenant au moins l'un des éléments suivants:
un type de trafic; une version de type de trafic; une période de génération ou d'envoi de trafic; l'un des 5QI, PPPP, délais, fiabilité, taux de transmission ou portée de transmission associés au trafic; des informations sur le point de fréquence de transmission du trafic; l'un des types de communication unicast, multicast ou broadcast; la programmation de la station de base ou la sélection autonome des ressources; des informations sur la partie de la bande passante BWP; la direction du faisceau de communication; ou la puissance d'émission;
des informations sur la mesure de la couverture comprenant au moins l'un des éléments suivants:
une ressource de configuration de la station de base, une ressource préconfigurée, une ressource gérée par l'opérateur, une ressource gérée par un non-opérateur, un état de service limité, ou des informations sur l'heure et l'emplacement géographique auxquels un type de ressource utilisée change; et
les informations de mesure de la mobilité comprenant au moins l'un des éléments suivants:
une identification de la zone, des informations géographiques sur la zone, une heure d'entrée dans la zone, une heure de sortie de la zone, ou une durée de voyage ou de séjour dans la zone.

21. Appareil de contrôle des tests de conduite, comprenant:
un module d'envoi, configuré pour envoyer, par un côté configuration, des informations de configuration de test de conduite par liaison latérale à un terminal, les informations de configuration de test de conduite par liaison latérale étant utilisées pour commander le terminal afin d'effectuer un test de conduite dans un environnement où se trouve le terminal et d'obtenir des informations de test de conduite par liaison latérale; et
un deuxième module de réception, configuré pour recevoir du terminal les informations relatives à l'essai de conduite par liaison latérale;
dans lequel les informations de configuration de l'essai de conduite par liaison latérale comprennent un élément de mesure comprenant au moins l'un des éléments suivants: mesure de l'encombrement du pool de ressources de la liaison latérale, mesure du conflit de ressources du pool de ressources de la liaison latérale, mesure de la couverture, mesure de la mobilité, mesure de la synchronisation, mesure de l'utilisation de l'ordonnancement semi-persistant SPS, ou mesure de la qualité de service QoS, de la liaison latérale;
dans lequel les informations relatives à l'essai de conduite par liaison latérale comprennent au moins l'un des éléments suivants:
les informations de mesure de l'encombrement du pool de ressources de liaison latérale;
des informations de mesure de la qualité de service de la liaison latérale comprenant au moins l'un des éléments suivants:
des informations sur le résultat de la mesure d'un taux d'erreur de bloc, BLER, basé sur un canal physique de partage de liaison latérale, PSSCH;
des informations sur le résultat de la mesure d'un BLER basé sur un canal de contrôle de liaison latérale physique, PSCCH;
des informations sur le résultat de la mesure d'un volume de données basé sur un canal logique de liaison latérale, ou un support de liaison latérale, ou une priorité de prose par paquet, PPPP, ou une fiabilité de prose par paquet, PPPR, ou un identificateur QoS du système de communication mobile de cinquième génération, 5QI, entre une paire source-cible;
des informations sur le résultat de la mesure d'un débit basé sur un canal logique de liaison latérale, ou un support de liaison latérale, ou un PPPP, ou un PPPR, ou un 5QI entre une paire source-cible;
des informations sur le résultat de la mesure d'un retard de paquet basé sur un canal logique de liaison latérale, ou un support de liaison latérale, ou un PPPP, ou un PPPR, ou un 5QI entre une paire source-cible;
des informations sur le résultat de la mesure d'un taux de perte de paquets basé sur un canal logique de liaison latérale, ou un support de liaison latérale, ou un PPPP, ou un PPPR, ou un 5QI entre une paire source-cible; ou
des informations sur le résultat de la mesure d'un taux de rejet de paquets basé sur un canal logique de liaison latérale, ou un support de liaison latérale, ou un PPPP, ou un PPPR, ou un 5QI entre une paire source-cible; et
des informations sur le trafic de la liaison latérale comprenant au moins l'un des éléments suivants:
un type de trafic; une version de type de trafic; une période de génération ou d'envoi de trafic; l'un des 5QI, PPPP, délais, fiabilité, taux de transmission ou
portée de transmission associés au trafic; des informations sur le point de fréquence de transmission du trafic; l'un des types de communication unicast,
multicast ou broadcast; la programmation de la station de base ou la sélection autonome des ressources; des informations sur la partie de la bande passante BWP;
la direction du faisceau de communication; ou la puissance d'émission;
des informations sur la mesure de la couverture comprenant au moins l'un des éléments suivants:
une ressource de configuration de la station de base, une ressource préconfigurée, une ressource gérée par l'opérateur, une ressource gérée par un non-opérateur, un état de service limité, ou des informations sur l'heure et l'emplacement géographique auxquels un type de ressource utilisée change; et
les informations de mesure de la mobilité comprenant au moins l'un des éléments suivants:
une identification de la zone, des informations géographiques sur la zone, une heure d'entrée dans la zone, une heure de sortie de la zone, ou une durée de voyage ou de séjour dans la zone.

22. Dispositif comprenant un processeur, une mémoire, une unité de communication et un bus de communication; dans lequel le bus de communication est configuré pour permettre la connexion et la communication entre le processeur et la mémoire; et
le processeur est configuré pour exécuter au moins un premier programme stocké dans la mémoire afin de mettre en œuvre la méthode d'essai de conduite de l'une quelconque des revendications 1 à 16; ou
le processeur est configuré pour exécuter au moins un second programme stocké dans la mémoire afin de mettre en œuvre la méthode de contrôle de l'épreuve de conduite décrite dans l'une des revendications 17 à

23. Support de stockage lisible par ordinateur stockant au moins un premier programme d'ordinateur et au moins un second programme d'ordinateur, dans lequel au moins un premier programme d'ordinateur est exécutable par au moins un processeur pour exécuter la méthode d'essai de conduite de l'une quelconque des revendications 1 à 16; et
l'au moins un deuxième programme d'ordinateur est exécutable par au moins un processeur pour mettre en œuvre la méthode de contrôle de l'épreuve de conduite de l'une des revendications 17 à 19.
